# EUROPEAN PATENT APPLICATION

(11) **EP 2 166 791 A2**
(43) Date of publication of application: **24.03.2010**
(21) Application number: 09169325.9
(22) Date of filing: 03.09.2009
(51) Int. Cl.: H04W 24/00

(54) **Wireless device and method of controlling and monitoring wireless device**

(30) Priority: 19.09.2008 JP 2008240521
(71) Applicant: Fujitsu Limited, Kawasaki-shi, Kanagawa 211-8588 (JP)
(72) Inventor: Sakama, Tadayuki, Kawasaki-shi, Kanagawa 211-8588 (JP)
(74) Representative: Stebbing, Timothy Charles

(57) **Abstract**

A wireless device (300) capable of being connected to any of a plurality of wireless control devices (200A, 200B) which themselves are connected to a monitoring device (100), the wireless device (300) being controlled and monitored by the monitoring device via one or more of the wireless control devices (200A, 200B). The wireless device (300) includes a transmitting and receiving unit for transmitting and receiving a signal to and from the wireless control device(s); and a selecting unit selecting, from among the plurality of wireless control devices (200A, 200B), the one wireless control device which transmits and receives a control and monitor signal, contained in the former signal, by which the monitoring device (100) controls and monitors the wireless device (300).

## Description

The present invention relates to a wireless device connected to a plurality of wireless control devices.

Over the recent years, an installing mode of a wireless base station has taken such a general type of topology that a wireless control unit (Radio Equipment Control; REC) and a wireless unit (Radio Equipment; RE) are installed in remote places and are connected via an optical fiber. Further, there has been increasingly a case where an interface unit between the REC and the RE involves using a Common Public Radio Interface (CPRI). The CPRI is defined as specifications of the interface between the REC and the RE.

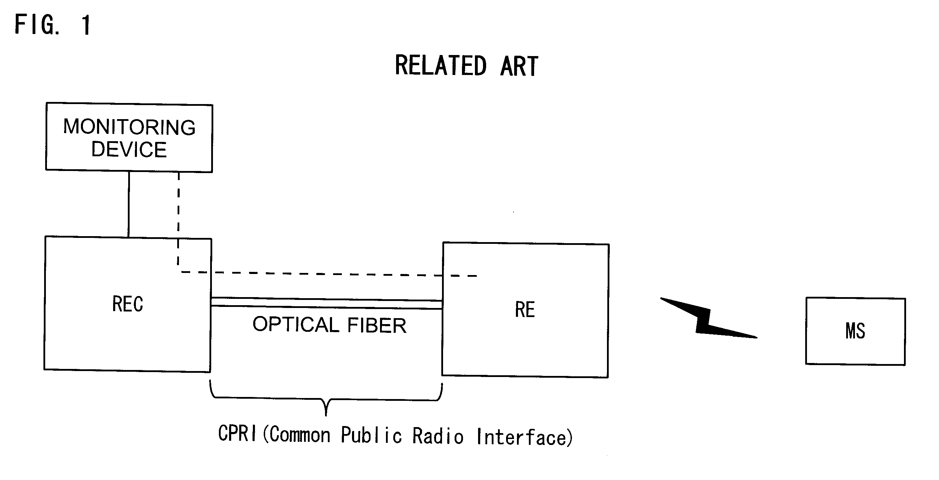

FIG. 1 is a diagram illustrating an example of the wireless base station in which the wireless control unit (REC) and the wireless unit (RE) are installed in the remote places. The RE performing direct communications with a terminal (Mobile Station; MS) and the REC controlling the RE are installed away from each other. The RE is connected via the optical fiber to the REC. Further, the interface between the RE and the REC involves using the CPRI. The REC is monitored by a monitoring device.

Further, a measure for a change of generation of a communication method in mobile communications requires a scheme that the RE is connected simultaneously to a plurality of RECs via a plurality of CPRI links, and different communication methods are provided simultaneously.

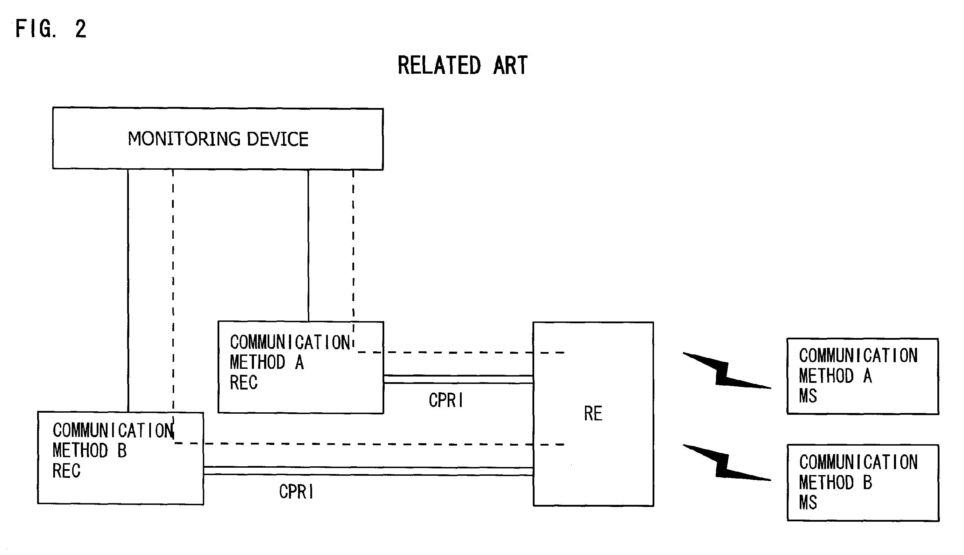

FIG. 2 is a diagram illustrating an example in which a plurality of wireless control units (RECs) is connected to one wireless unit (RE). The REC using a communication method A and the REC using a communication method B are connected to one RE. The MS using the communication method A and the MS using the communication method B are connected to the RE. The monitoring device monitors each REC.
[Patent document 1] Japanese Unexamined Patent Publication No.2007-511955
[Non-Patent document 1] Ericsson AB, Huawei Technologies Co. Ltd, NEC Corporation, Nortel Networks SA and Siemens AG, "common Public Radio Interface Specification V1.3", October 1, 2004
[Non-Patent document 2] Ericsson AB, Huawei Technologies Co. Ltd, NEC Corporation, Nortel Networks SA and Siemens AG, "common Public Radio Interface Specification V2.0", October 1, 2004

In the wireless base station constructed of the plurality of RECs and the RE which can be shared with the plurality of RECs, it is desirable that the RE accommodates the plurality of CPRI links.

FIG. 3 is a diagram illustrating an example of a CPRI protocol stack. It is also desirable that the CPRI protocol stack is terminated according to every CPRI link, and each CPRI link in the RE is connected.

FIG. 4 is a diagram illustrating an example of blocks of the RE accommodating the plurality of CPRIs.

A general configuration of the block in the RE is what implements processing units of Layer1 through Layer 3 with respect to each CPRI. In particular, a monitor and control process in the RE is executed by an MPU and implemented in software. Therefore, the RE accommodating the plurality of CPRIs has an increase in scale of circuits and software for realizing the monitor and control process as compared with the RE accommodating the single CPRI as hitherto used.

On the other hand, the RE is installed in a variety of places such as an underground shopping mall, a station precinct and an interior of a building, and is therefore preferably to be downsized, decreased in weight and low in power consumption. The increase in scale of the circuits and the software in the RE accommodating the plurality of CPRIs, however, becomes a hindrance against reducing the size, weight and power consumption.

It is therefore desirable to simplify a configuration of the wireless device (RE) connected to the plurality of wireless control devices (RECs).

The wireless device disclosed herein adopts the following means.

Namely, according to an aspect of the present invention, there is provided a wireless device arranged for connection to any one or more of a plurality of wireless control devices, the control devices being in turn connected to a monitoring device, the wireless device being controlled and monitored by the monitoring device via the wireless control device(s). The wireless device includes:
a transmitting and receiving unit for transmitting and receiving a signal to and from the one or more wireless control device; and
a selecting unit for selecting, from among the plurality of wireless control devices, the one wireless control device which transmits and receives a control and monitor signal, contained in said signal, by which the monitoring device controls and monitors the wireless device.

Thus, the wireless device connected to the plurality of wireless control devices can select one wireless control device transmitting and receiving the monitor and control signal. By the wireless device selecting one wireless control device transmitting and receiving the monitor and control signal, a throughput of the control and monitor signal can be reduced. In this way, a configuration of the wireless device connected to the plurality of wireless control devices can be simplified.

According to another aspect of the present invention there is provided a wireless device controlling and monitoring method, in a wireless device connected to a plurality of wireless control devices connecting with a monitoring device, and controlled and monitored by the monitoring device via the wireless control device, by which the wireless device executes:
transmitting and receiving a signal to and from the wireless control device; and selecting, from within the plurality of wireless control devices, the one wireless control device which transmits and receives a control and monitor signal, contained in the signal, by which the monitoring device controls and monitors a self-device.

According to a further aspect there is provided software for making a wireless device perform the above method.
Reference is made, by way of example only, to the accompanying drawings in which:
FIG. 1 is a diagram illustrating an example of a wireless base station where a wireless control unit (REC: Radio Equipment Control) and a wireless unit (RE: Radio Equipment) are installed in remote places.
FIG. 2 is a diagram depicting an example where a plurality of wireless control units (RECs) are connected to one single wireless unit (RE).

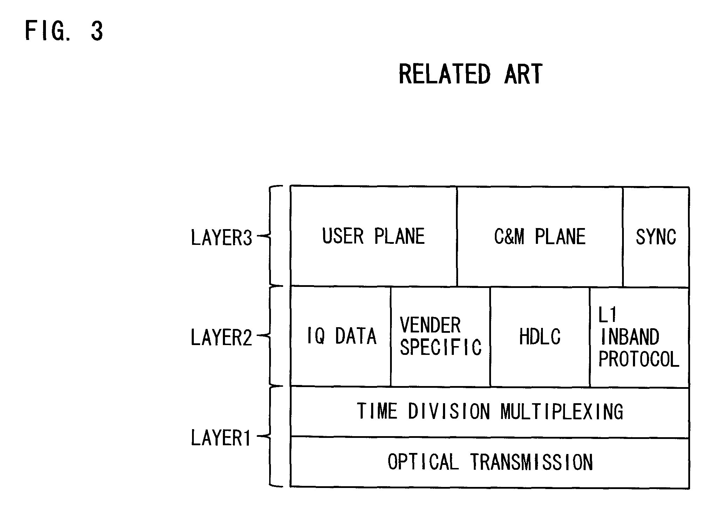

FIG. 3 is a diagram illustrating an example of a CPRI protocol stack.

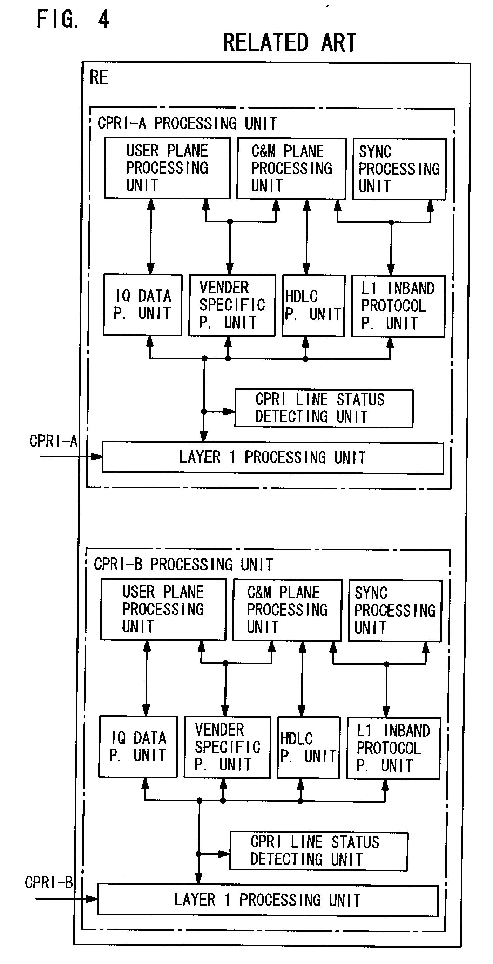

FIG. 4 is a diagram illustrating an example of the RE accommodating a plurality of CPRIs.

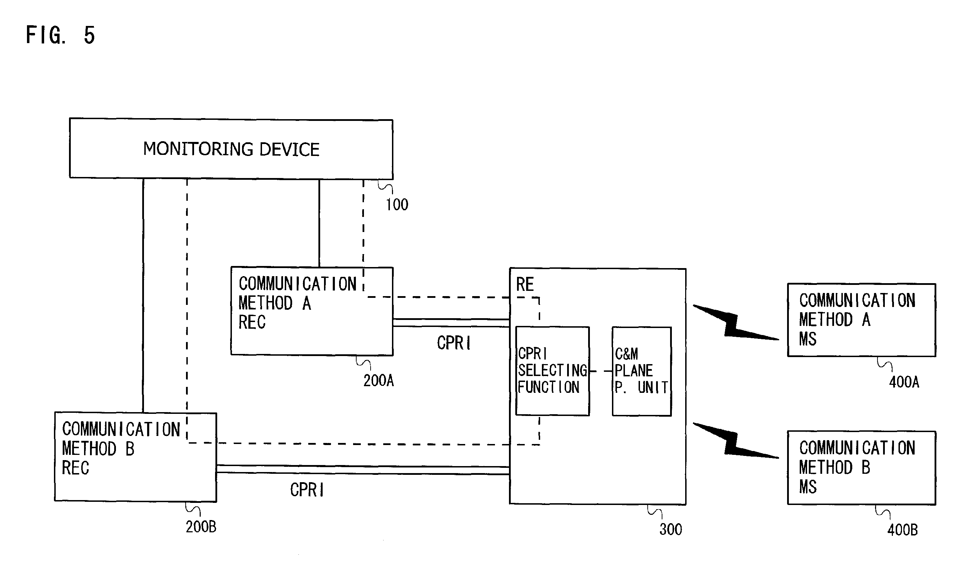

FIG. 5 is a diagram illustrating an example of an example of a system architecture.

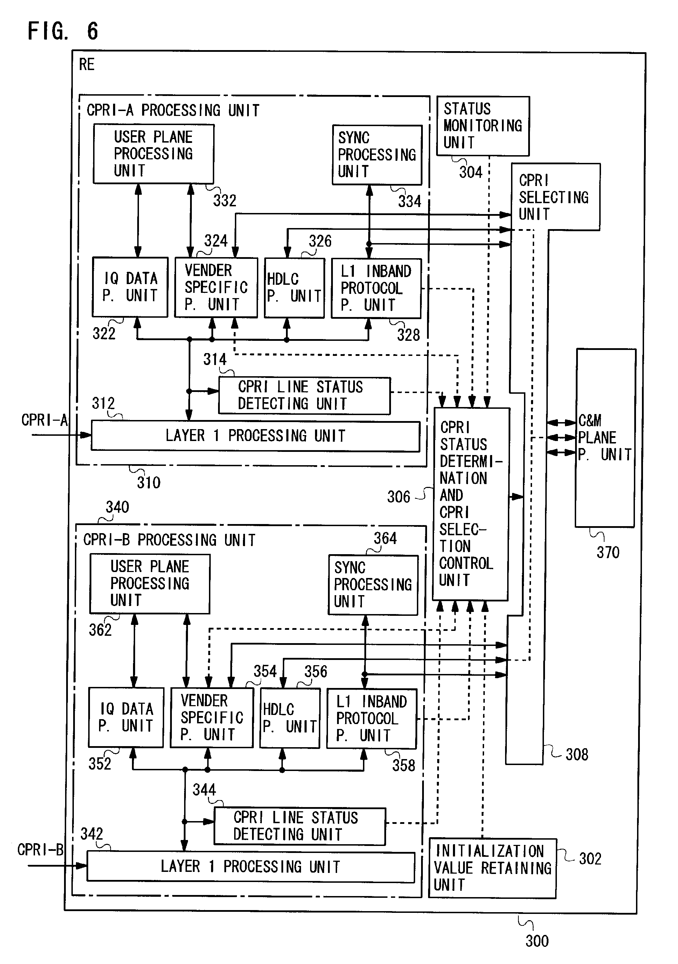

FIG. 6 is a diagram illustrating an example of a configuration of the RE.

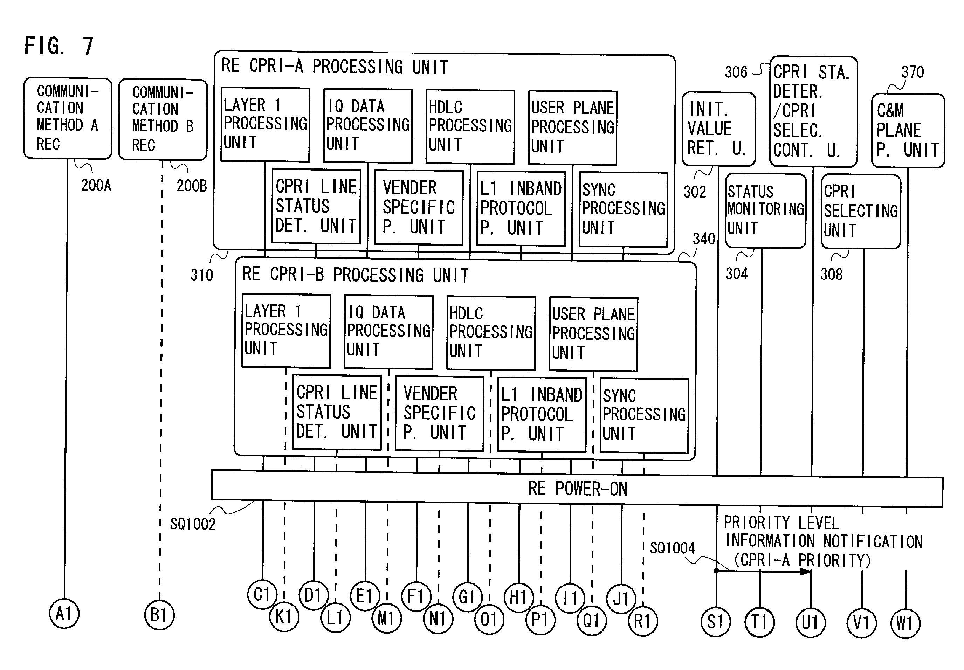

FIG. 7 is a diagram illustrating an example (1) of an operation sequence between the RE and the REC when normally started up.

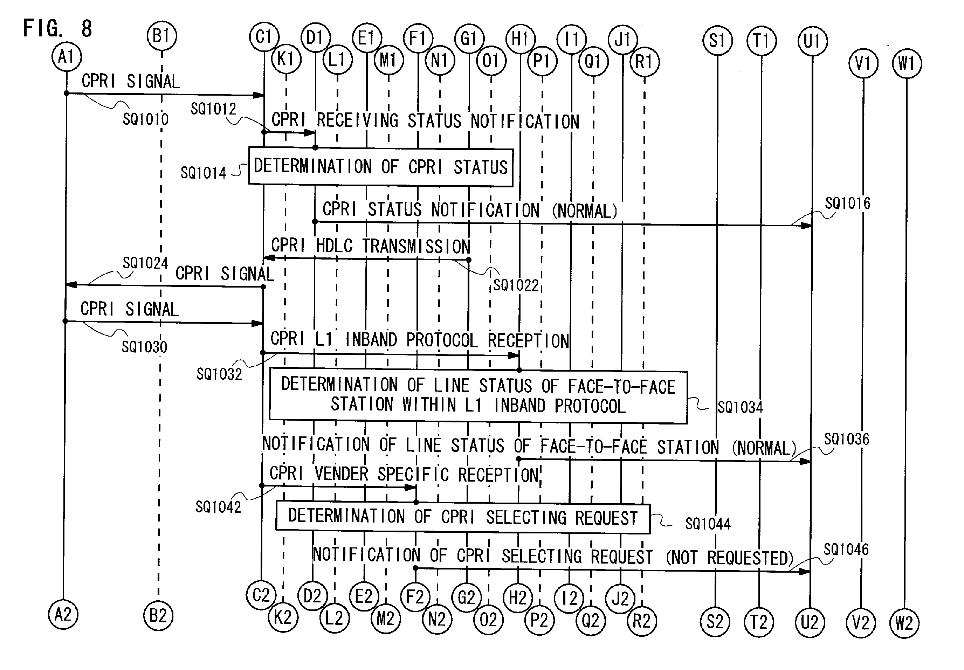

FIG. 8 is a diagram illustrating an example (2) of the operation sequence between the RE and the REC when normally started up.

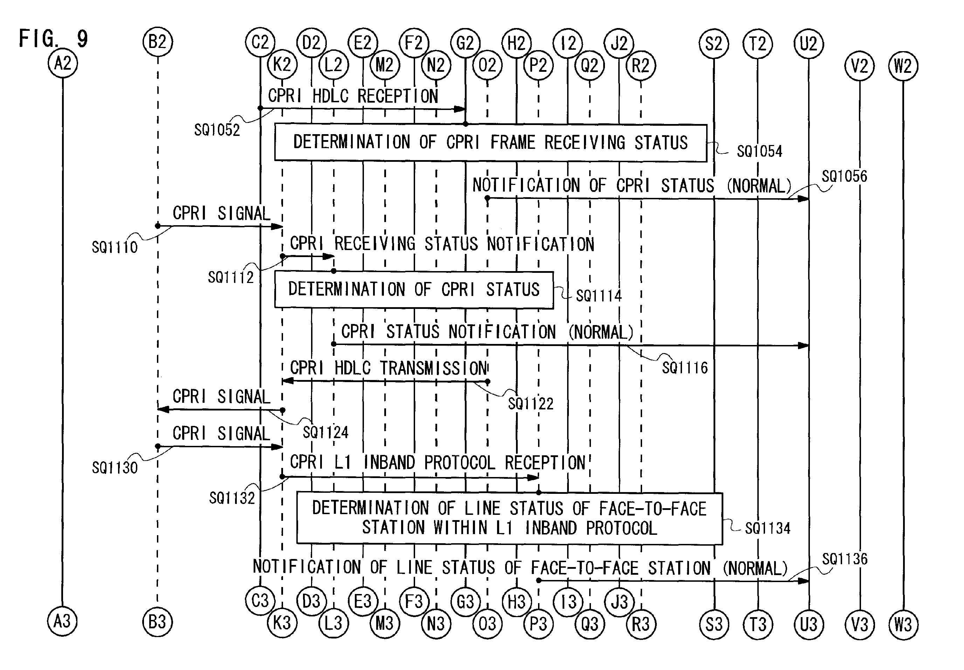

FIG. 9 is a diagram illustrating an example (3) of the operation sequence between the RE and the REC when normally started up.

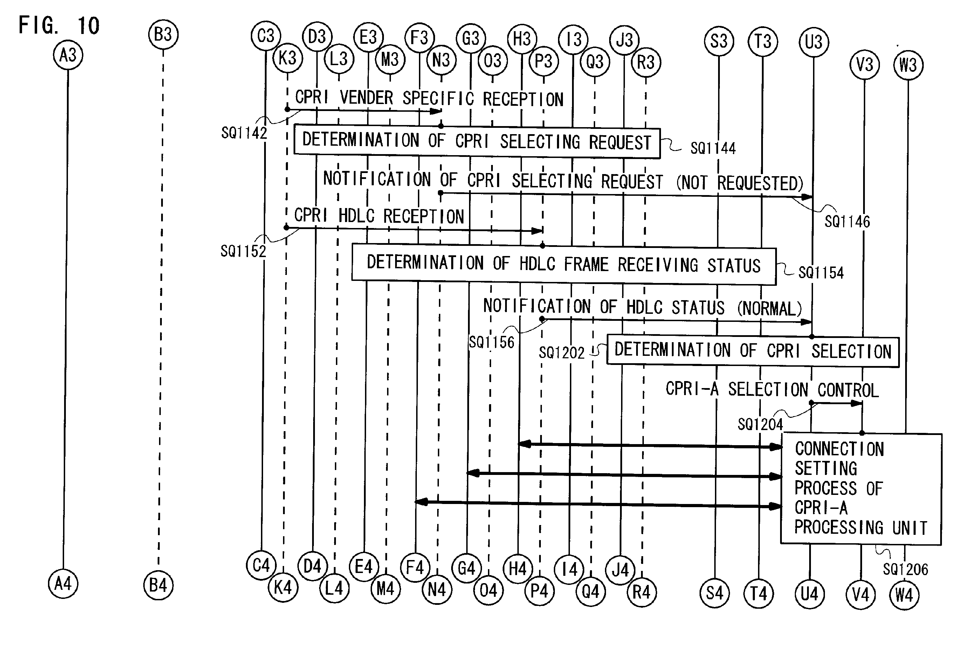

FIG. 10 is a diagram illustrating an example (4) of the operation sequence between the RE and the REC when normally started up.

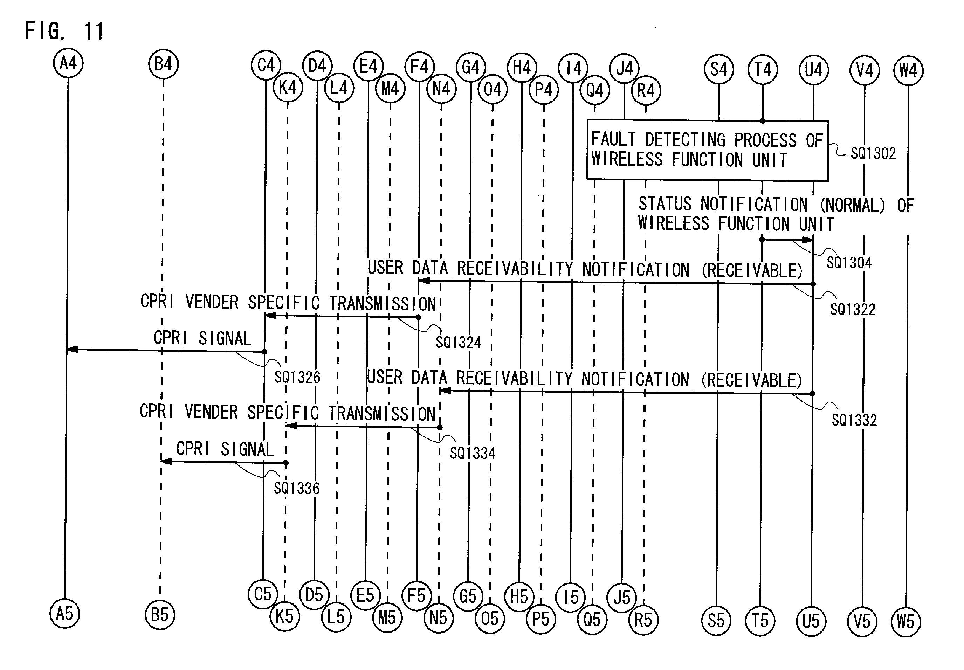

FIG. 11 is a diagram illustrating an example (5) of the operation sequence between the RE and the REC when normally started up.

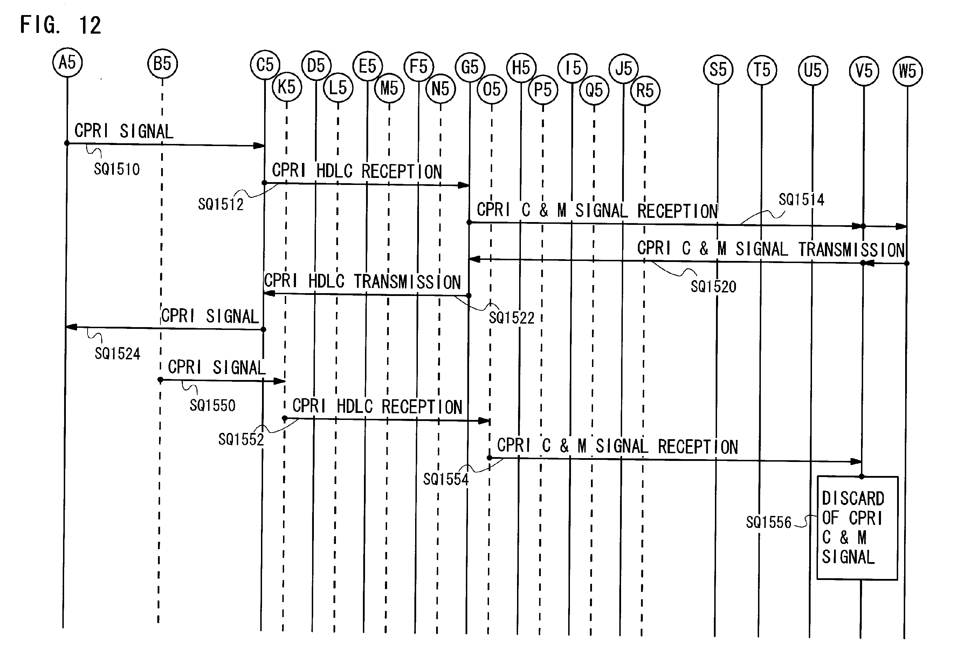

FIG. 12 is a diagram illustrating an example (6) of the operation sequence between the RE and the REC when normally started up.

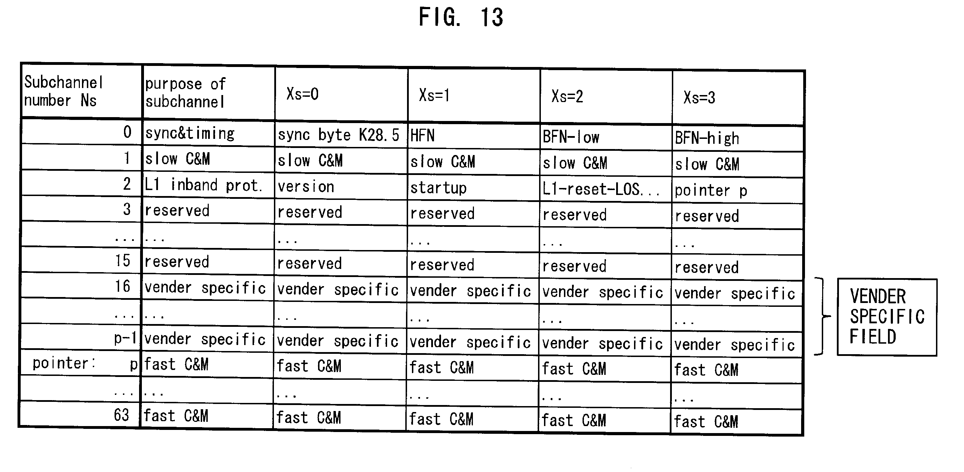

FIG. 13 is a diagram illustrating an example of a subchannel within a hyper frame.

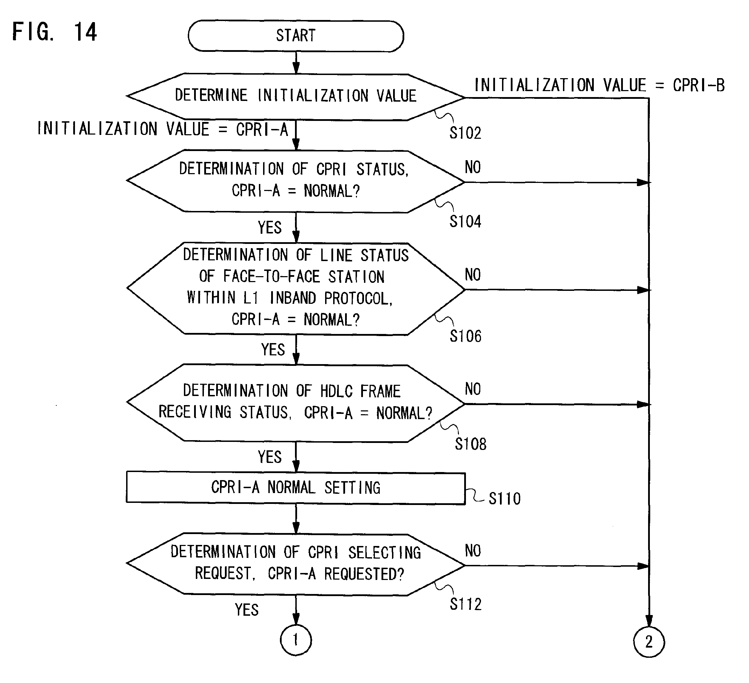

FIG. 14 is a flowchart illustrating a detailed operation flow (1) of a CPRI selection determining process of a CPRI status determination and CPRI selection control unit.

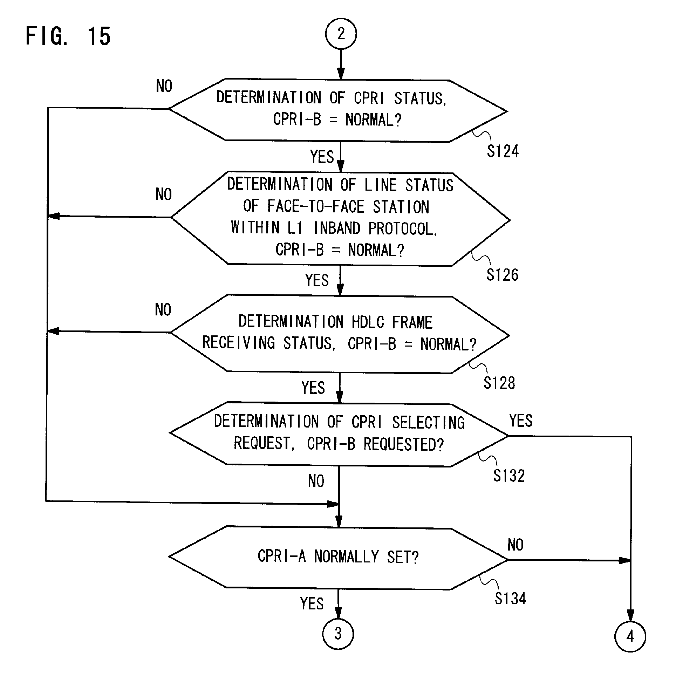

FIG. 15 is a flowchart illustrating a detailed operation flow (2) of the CPRI selection determining process of the CPRI status determination and CPRI selection control unit.

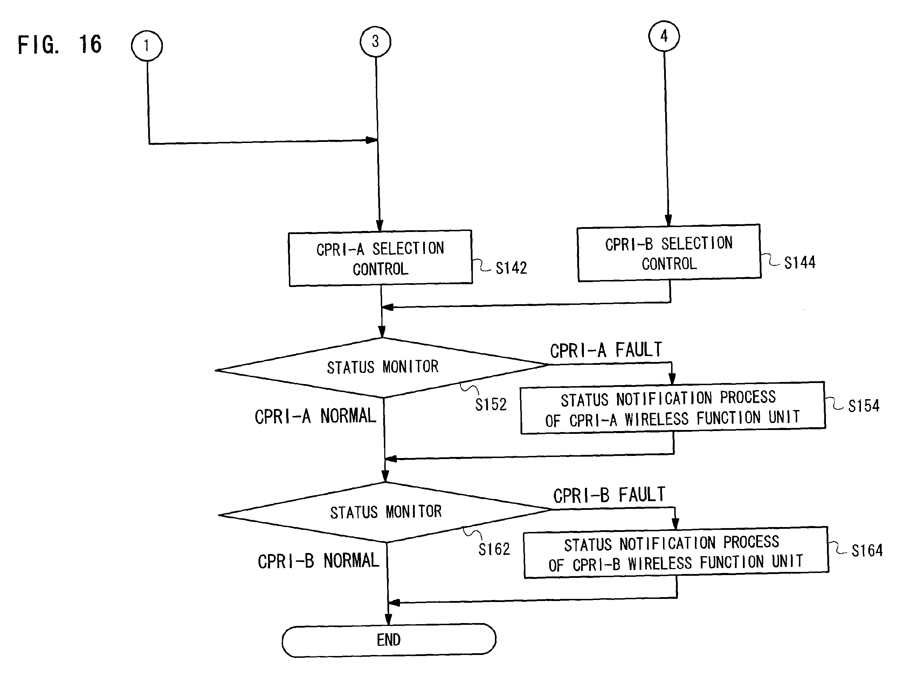

FIG. 16 is a flowchart illustrating a detailed operation flow (3) of the CPRI selection determining process of the CPRI status determination and CPRI selection control unit.

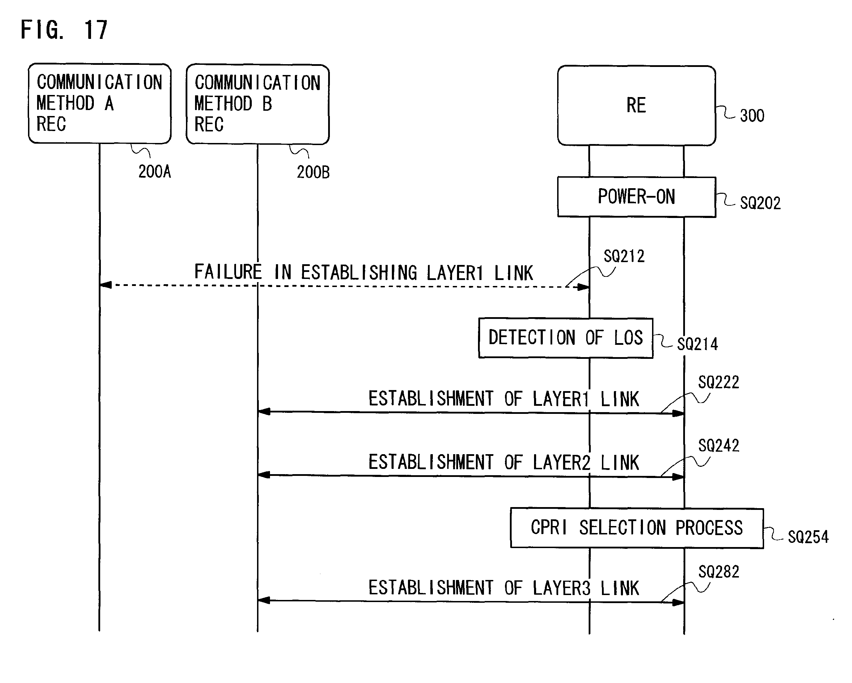

FIG. 17 is a diagram illustrating a sequence example of an outline of an operation when detecting a LOS.

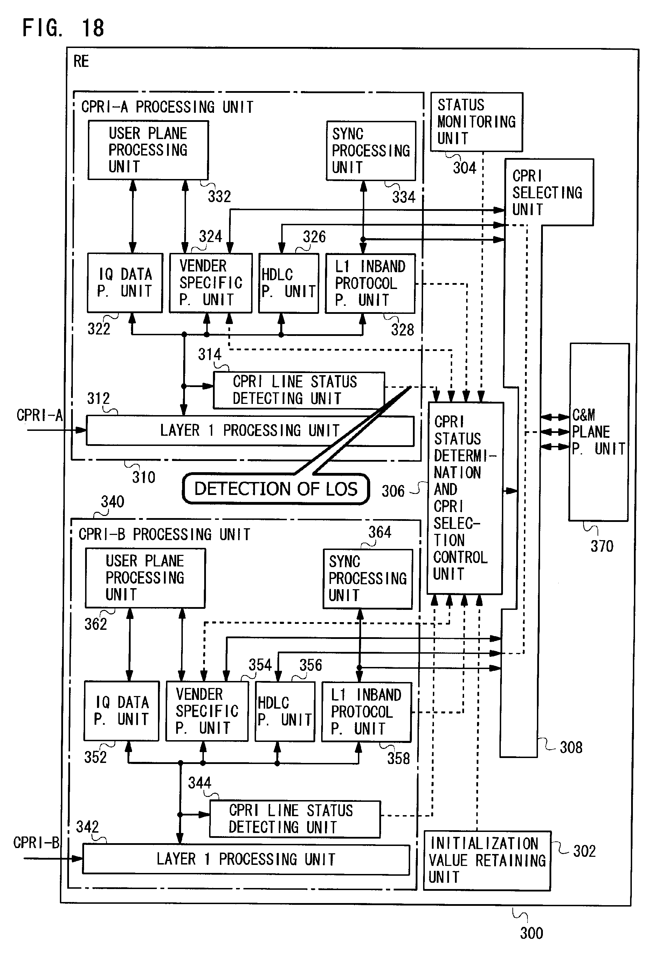

FIG. 18 is a diagram illustrating an example of a configuration of the RE when detecting the LOS.

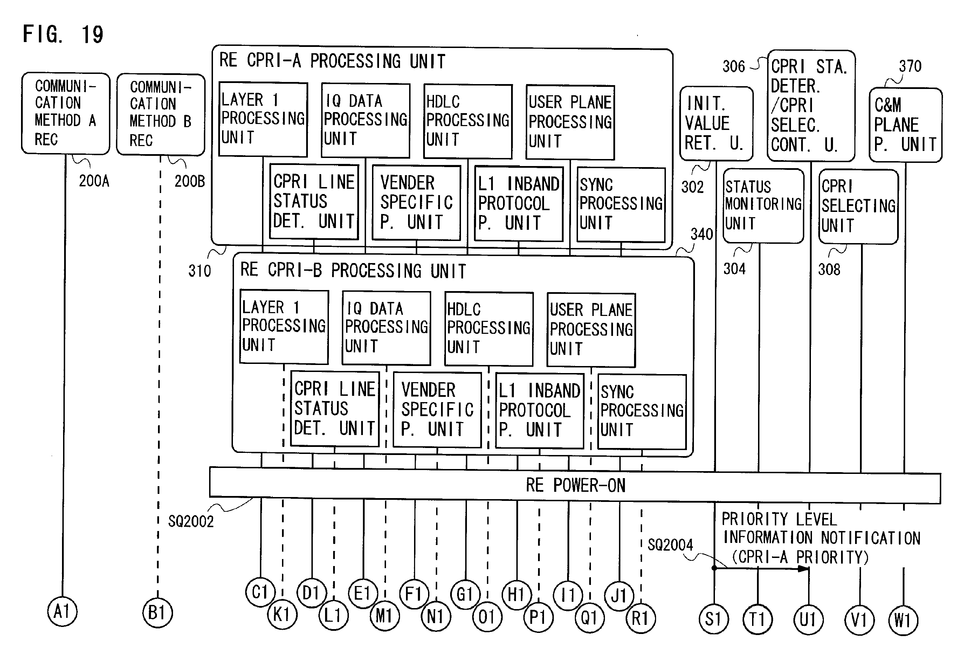

FIG. 19 is a diagram illustrating an example of an operation sequence (1) between the RE and the REC when detecting the LOS.

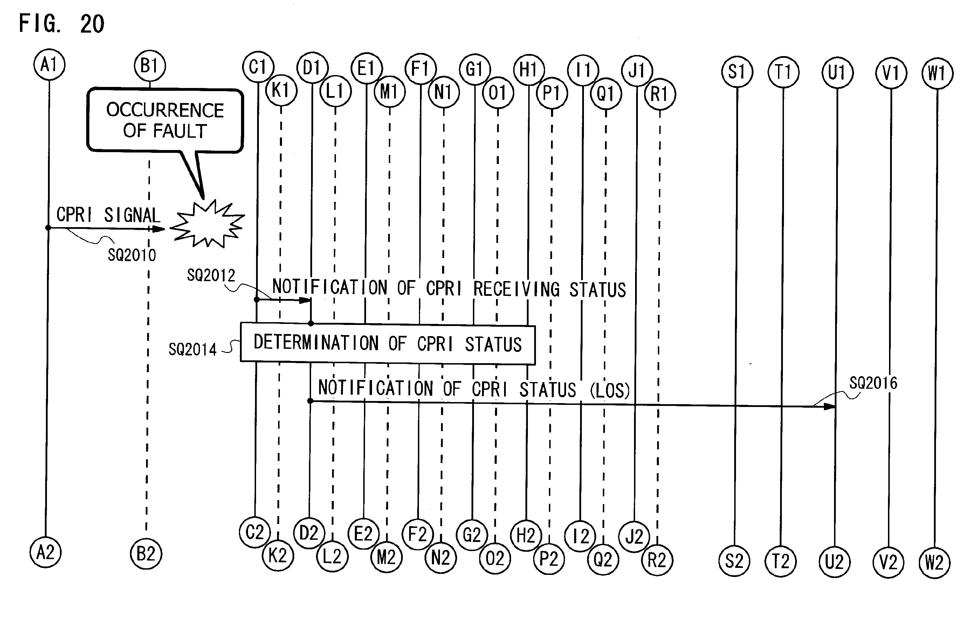

FIG. 20 is a diagram illustrating an example of an operation sequence (2) between the RE and the REC when detecting the LOS.

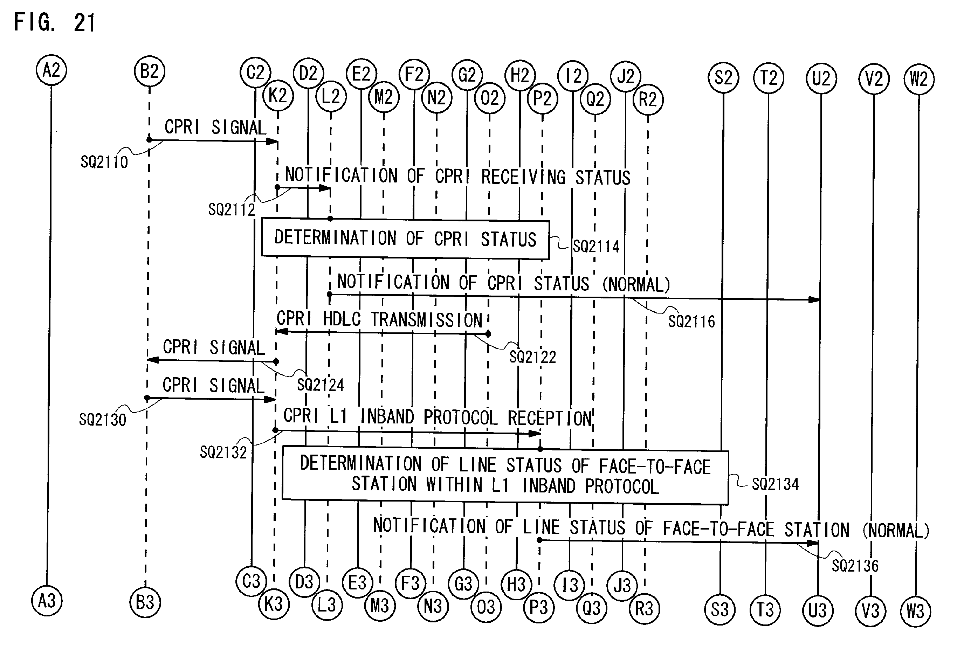

FIG. 21 is a diagram illustrating an example of an operation sequence (3) between the RE and the REC when detecting the LOS.

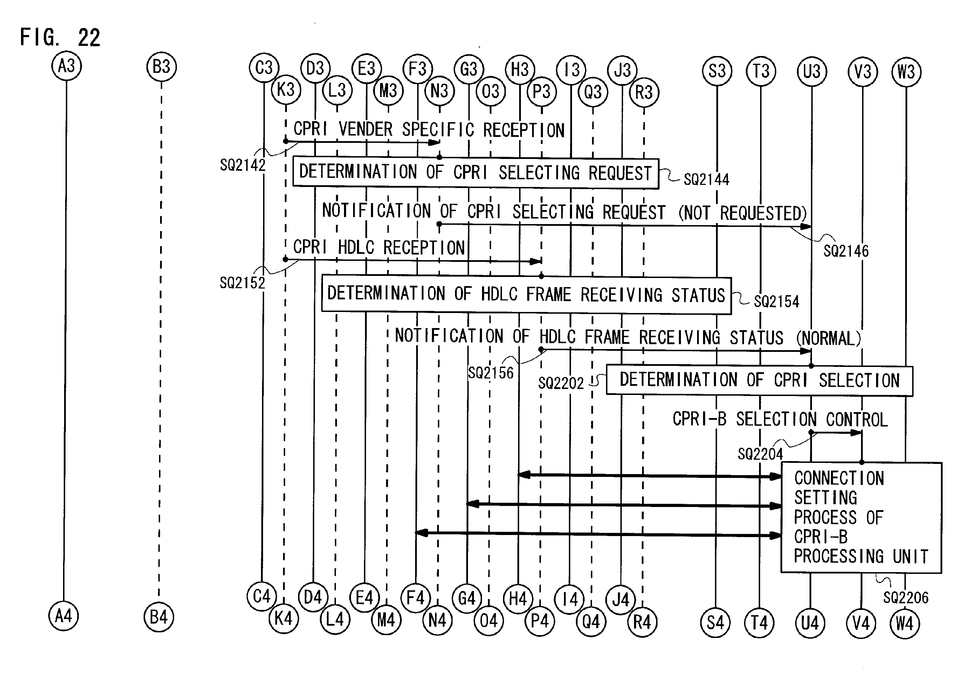

FIG. 22 is a diagram illustrating an example of an operation sequence (4) between the RE and the REC when detecting the LOS.

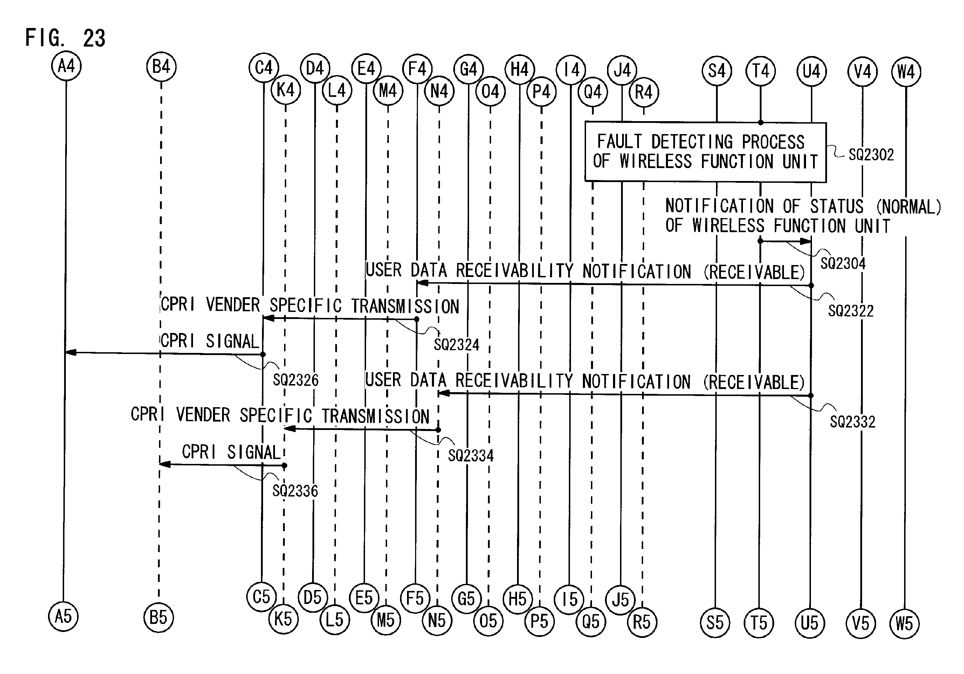

FIG. 23 is a diagram illustrating an example of an operation sequence (5) between the RE and the REC when detecting the LOS.

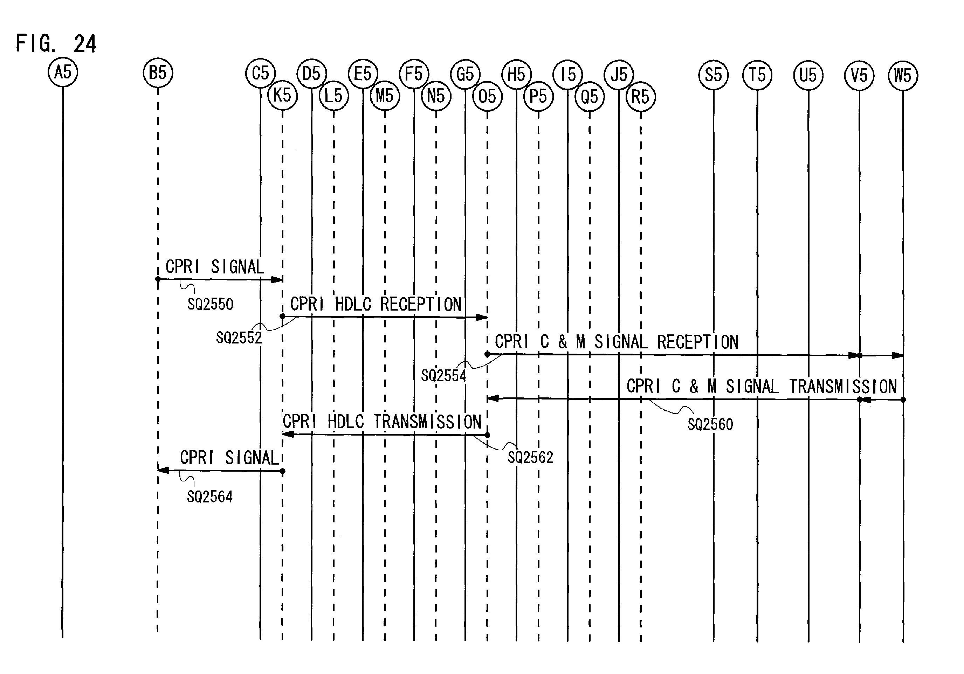

FIG. 24 is a diagram illustrating an example of an operation sequence (6) between the RE and the REC when detecting the LOS.

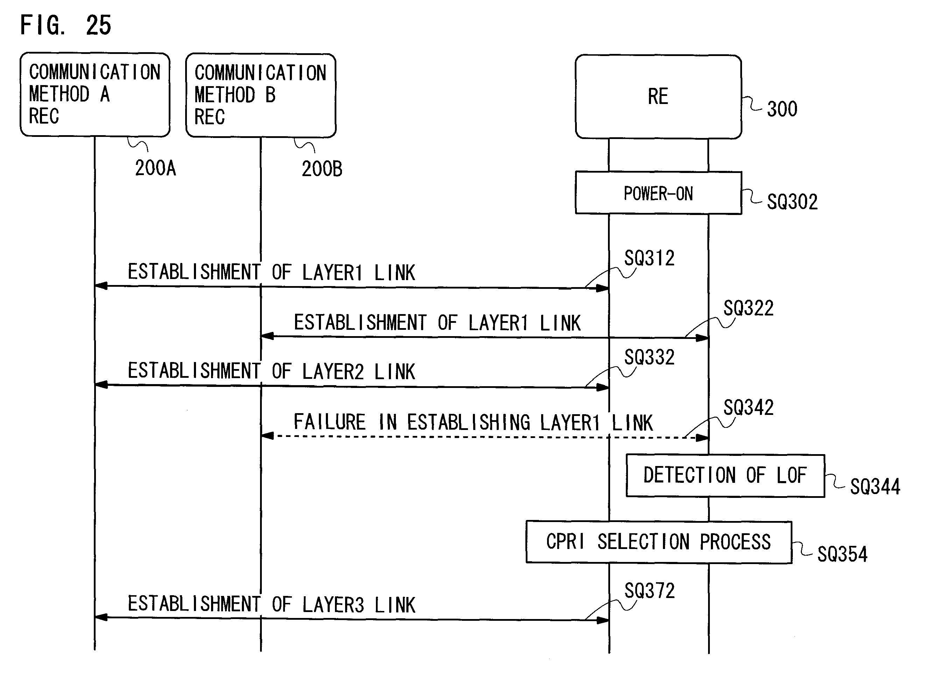

FIG. 25 is a diagram illustrating a sequence example of an outline of an operation when detecting a LOF.

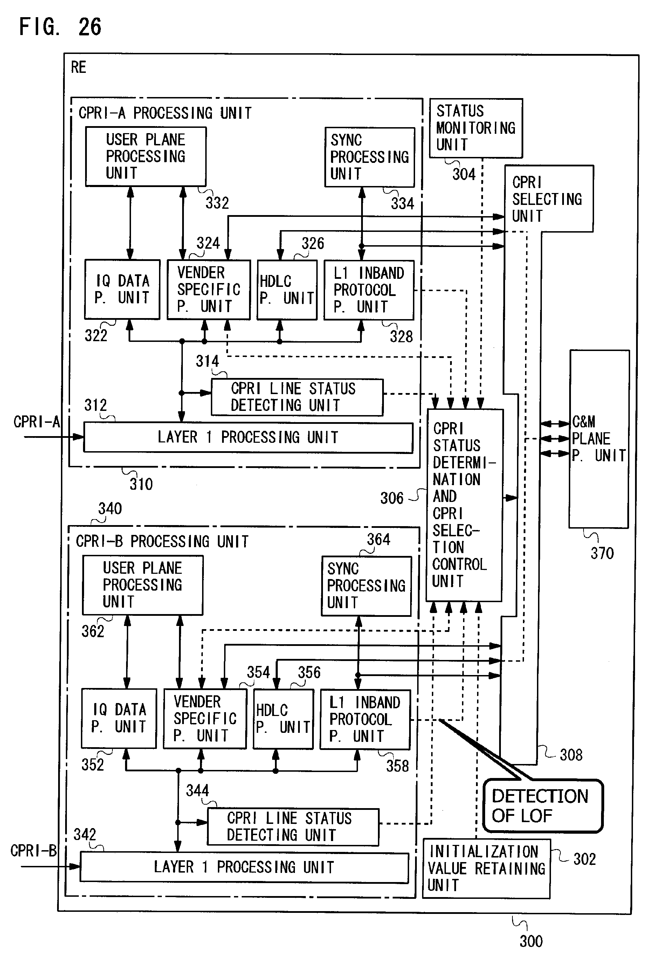

FIG. 26 is a diagram illustrating an example of a configuration of the RE when detecting the LOF.

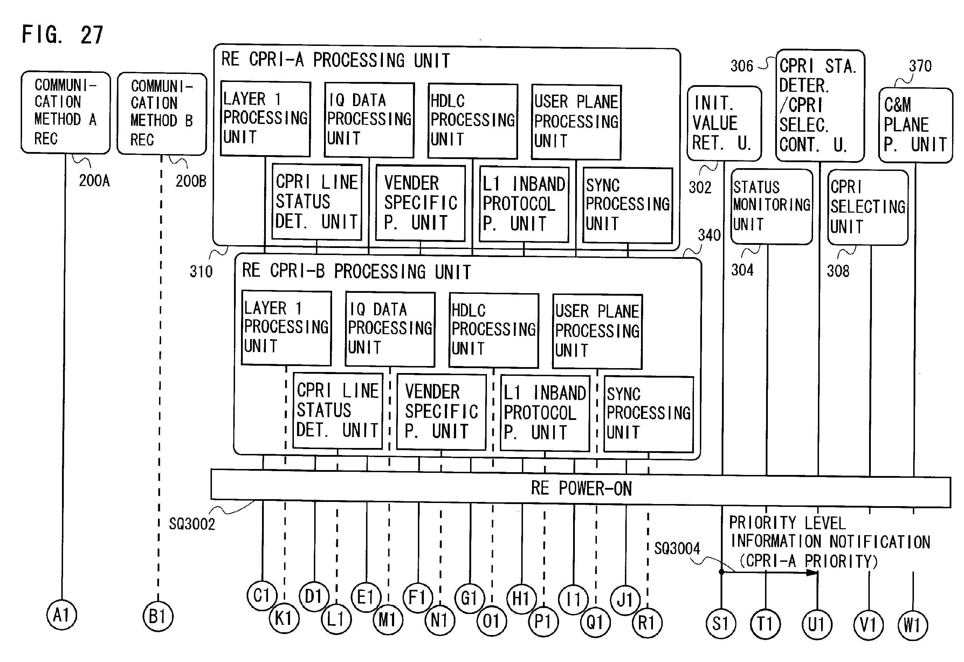

FIG. 27 is a diagram illustrating an example of an operation sequence (1) between the RE and the REC when detecting the LOF.

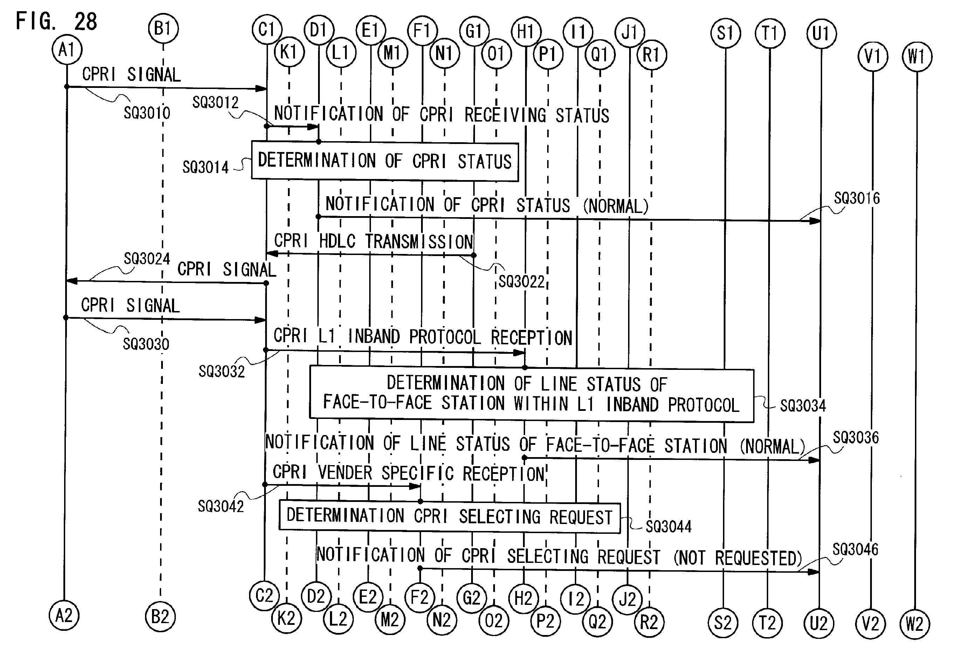

FIG. 28 is a diagram illustrating an example of an operation sequence (2) between the RE and the REC when detecting the LOF.

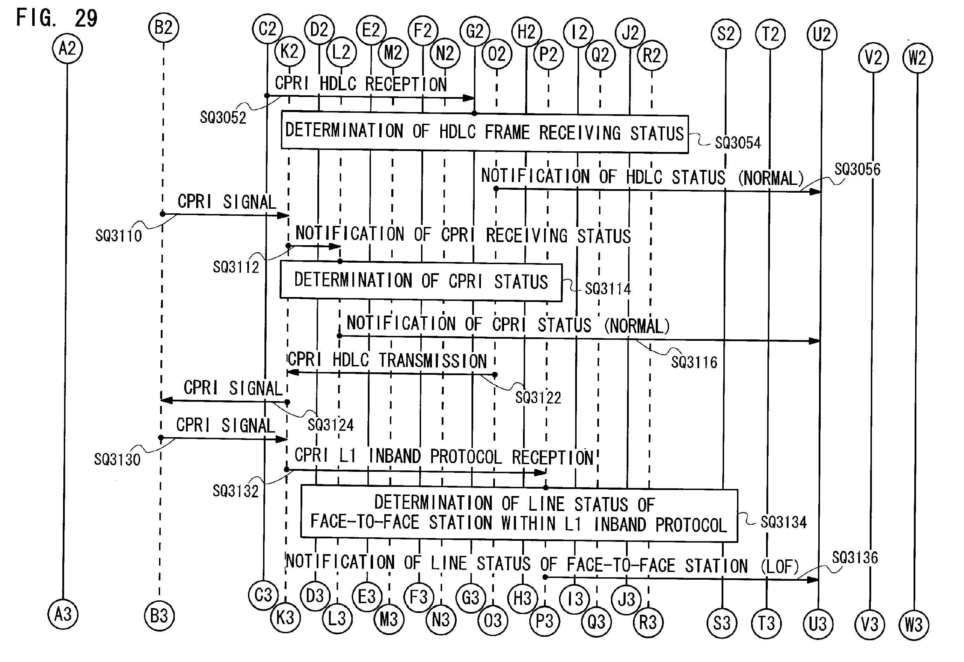

FIG. 29 is a diagram illustrating an example of an operation sequence (3) between the RE and the REC when

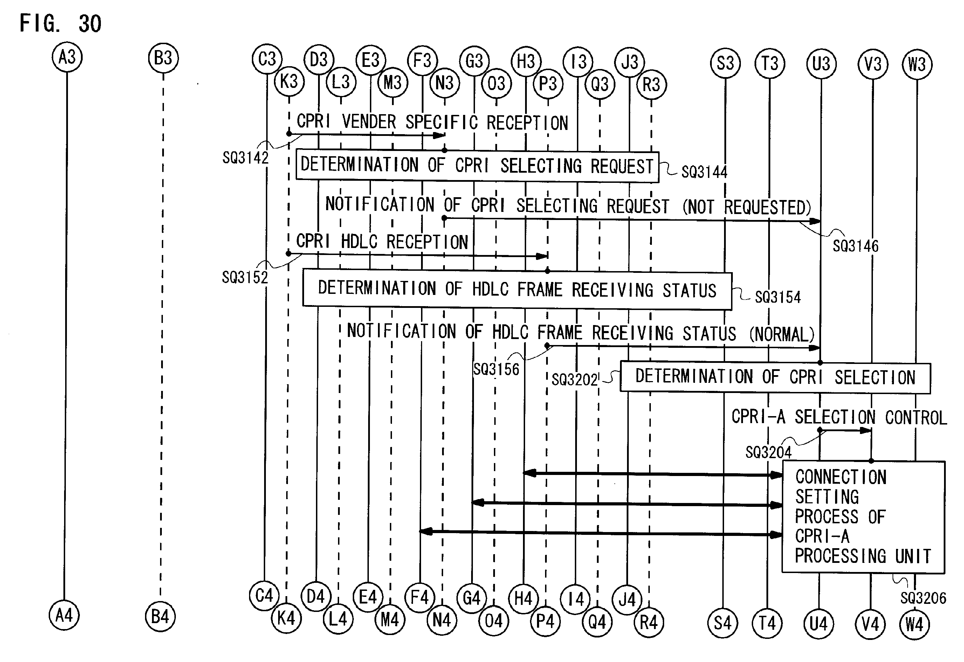

FIG. 30 is a diagram illustrating an example of an operation sequence (4) between the RE and the REC when detecting the LOF.

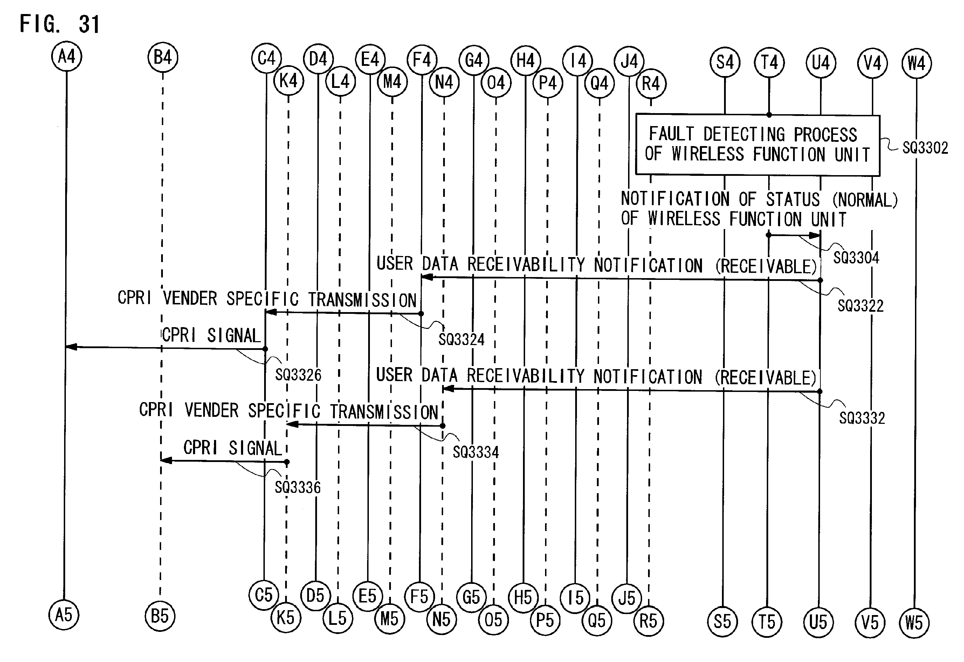

FIG. 31 is a diagram illustrating an example of an operation sequence (5) between the RE and the REC when detecting the LOF.

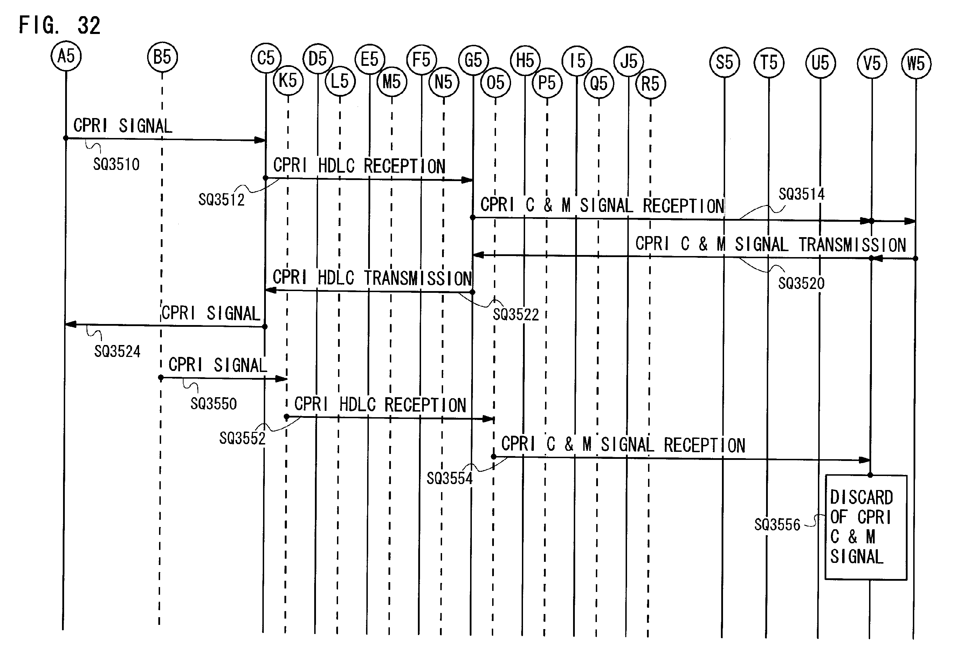

FIG. 32 is a diagram illustrating an example of an operation sequence (6) between the RE and the REC when detecting the LOF.

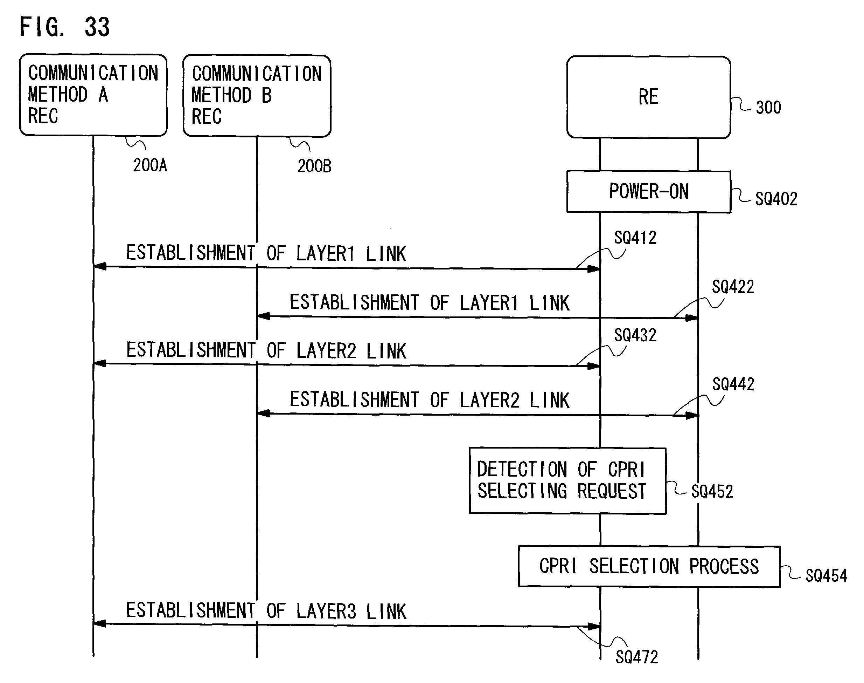

FIG. 33 is a diagram illustrating a sequence example of an outline of an operation when making use of a CPRI selecting request.

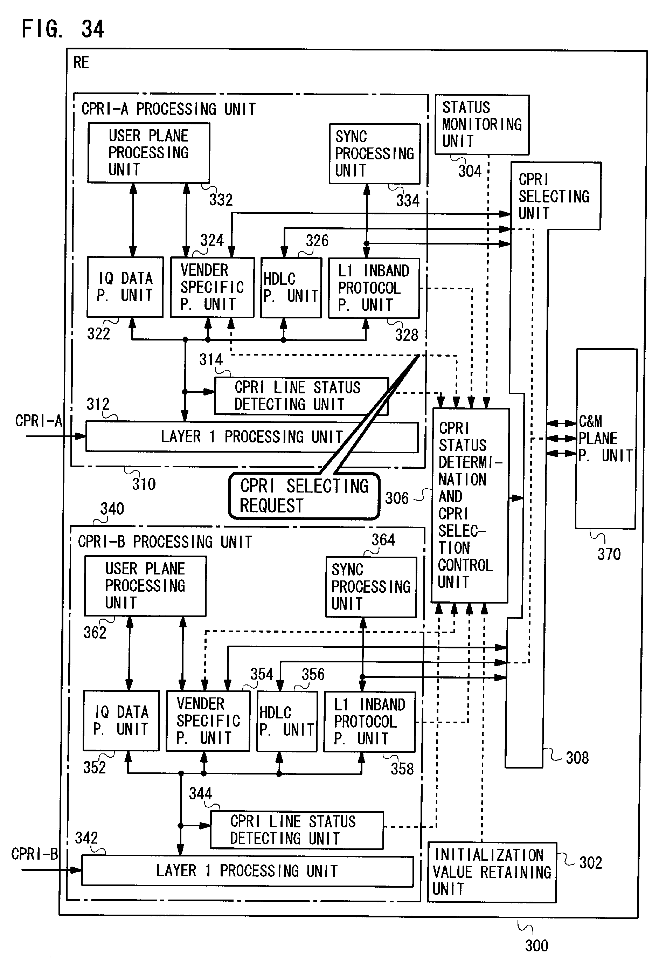

FIG. 34 is a diagram illustrating an example of a configuration of the RE when making use of the CPRI selecting request.

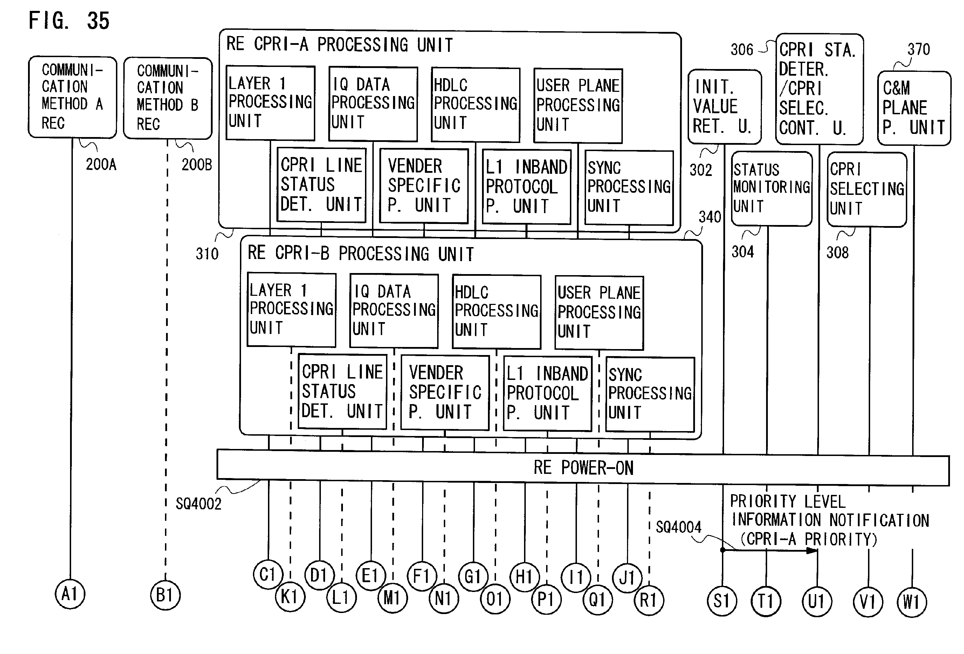

FIG. 35 is a diagram illustrating an example (1) of the operation sequence between the RE and the REC when making use of the CPRI selecting request.

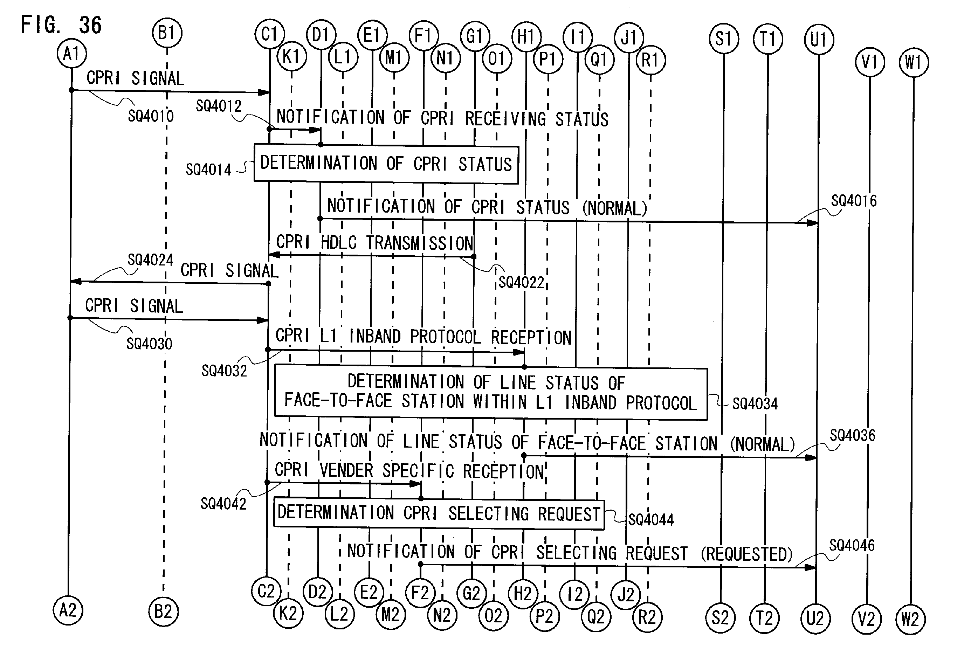

FIG. 36 is a diagram illustrating an example (2) of the operation sequence between the RE and the REC when making use of the CPRI selecting request.

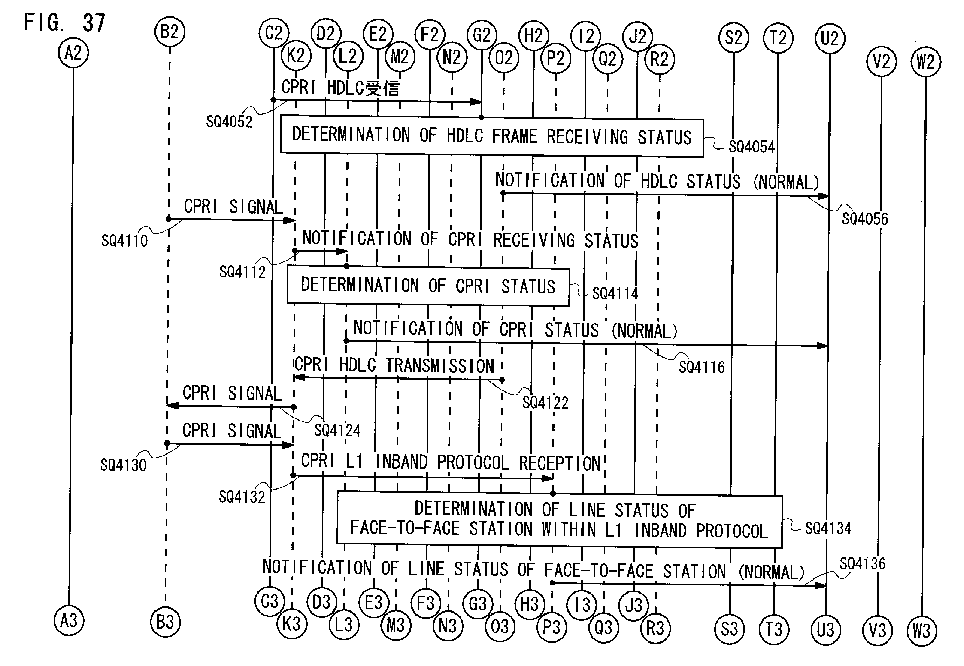

FIG. 37 is a diagram illustrating an example (3) of the operation sequence between the RE and the REC when making use of the CPRI selecting request.

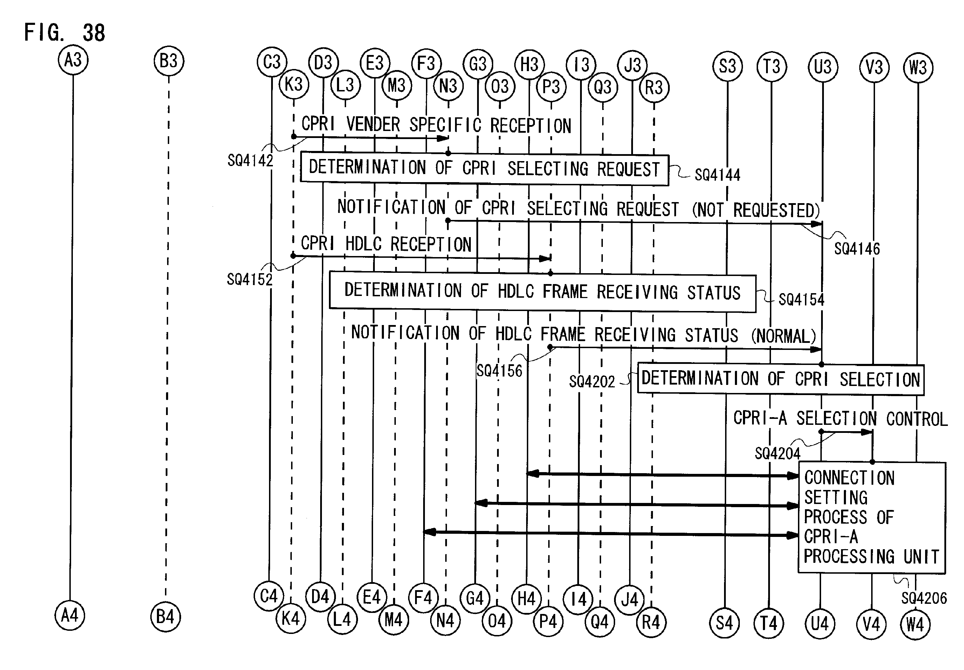

FIG. 38 is a diagram illustrating an example (4) of the operation sequence between the RE and the REC when making use of the CPRI selecting request.

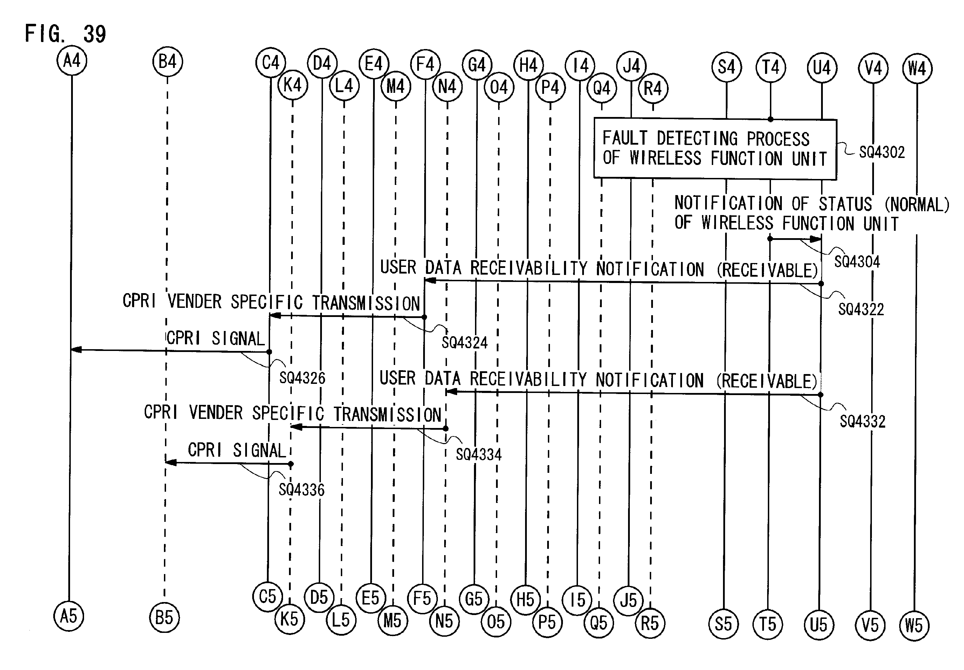

FIG. 39 is a diagram illustrating an example (5) of the operation sequence between the RE and the REC when making use of the CPRI selecting request.

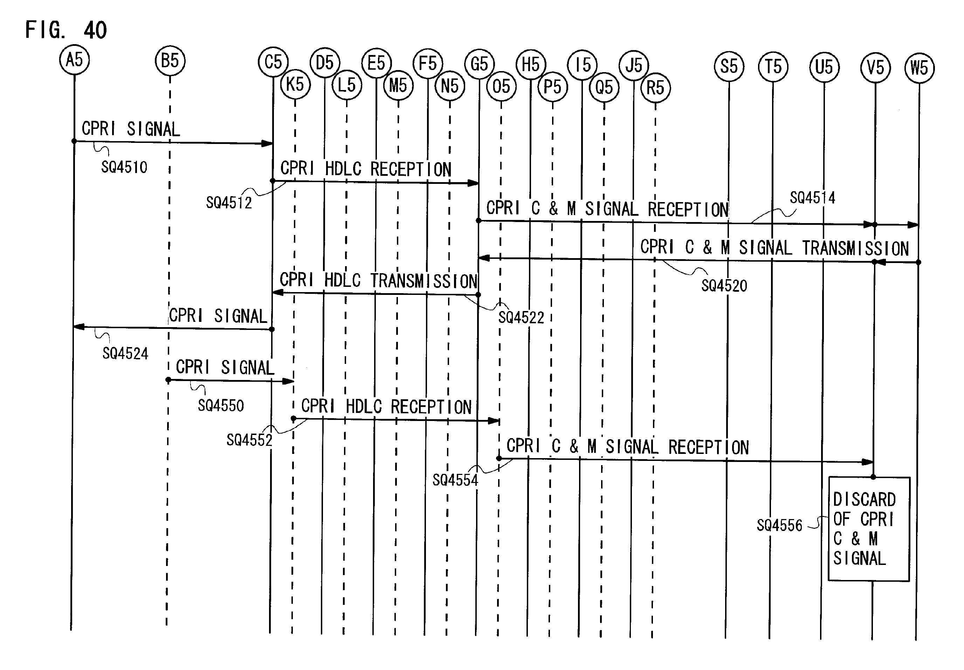

FIG. 40 is a diagram illustrating an example (6) of the operation sequence between the RE and the REC when making use of the CPRI selecting request.

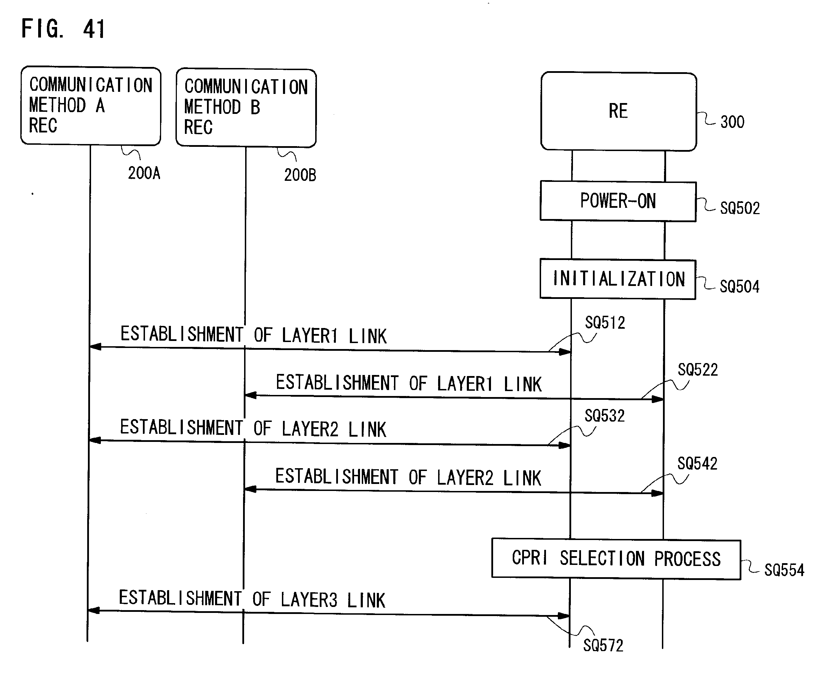

FIG. 41 is a diagram illustrating a sequence example of an output of an operation when storing priority level information in an initialization value retaining unit.

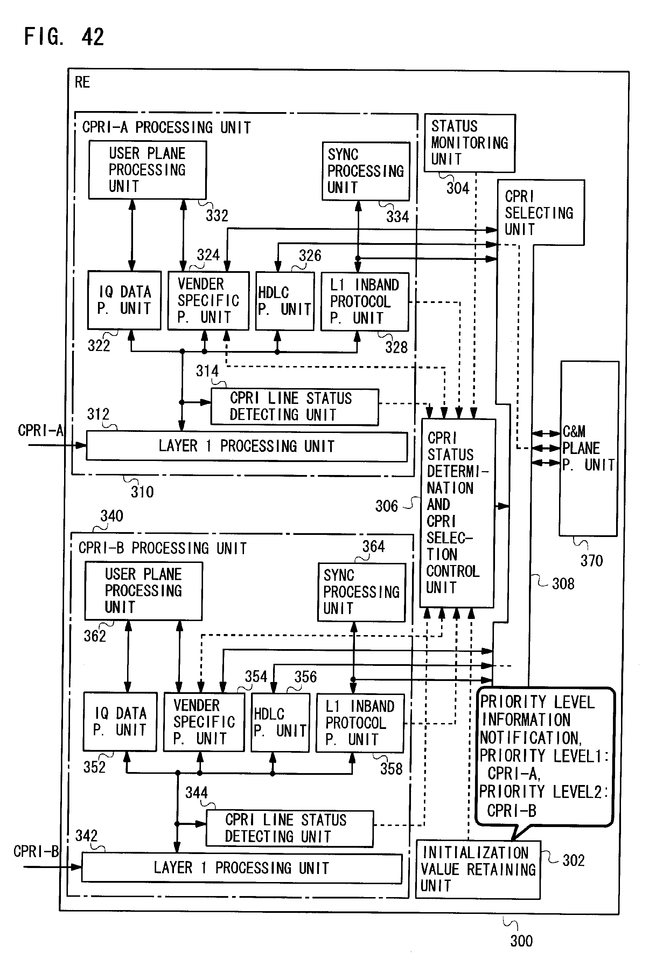

FIG. 42 is a diagram illustrating an example of a configuration of the RE when storing the priority level information in the initialization value retaining unit.

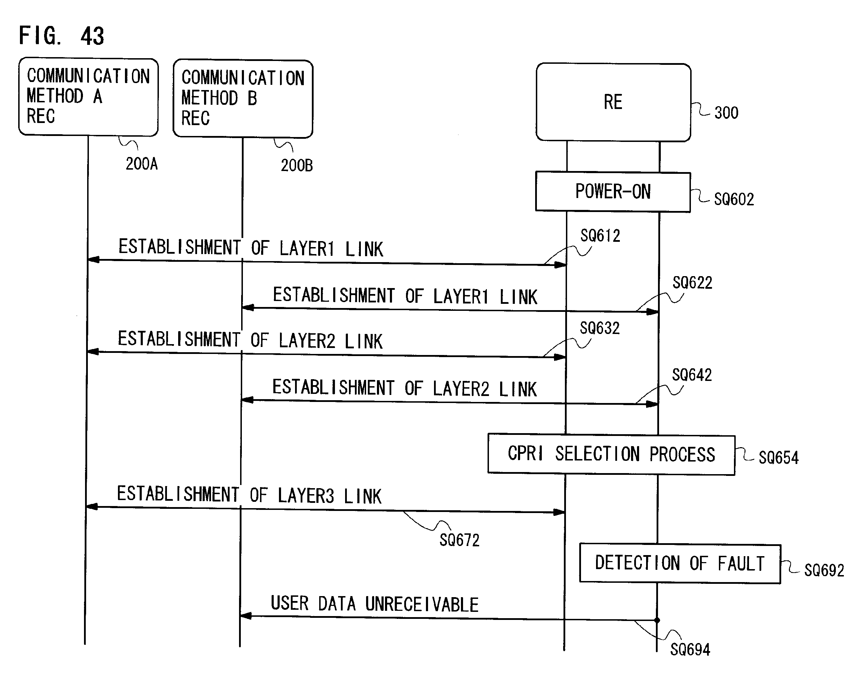

FIG. 43 is a diagram illustrating a sequence example of an outline of an operation when inserting information representing user data receivable and unreceivable status in a specified address of a Vender Specific field.

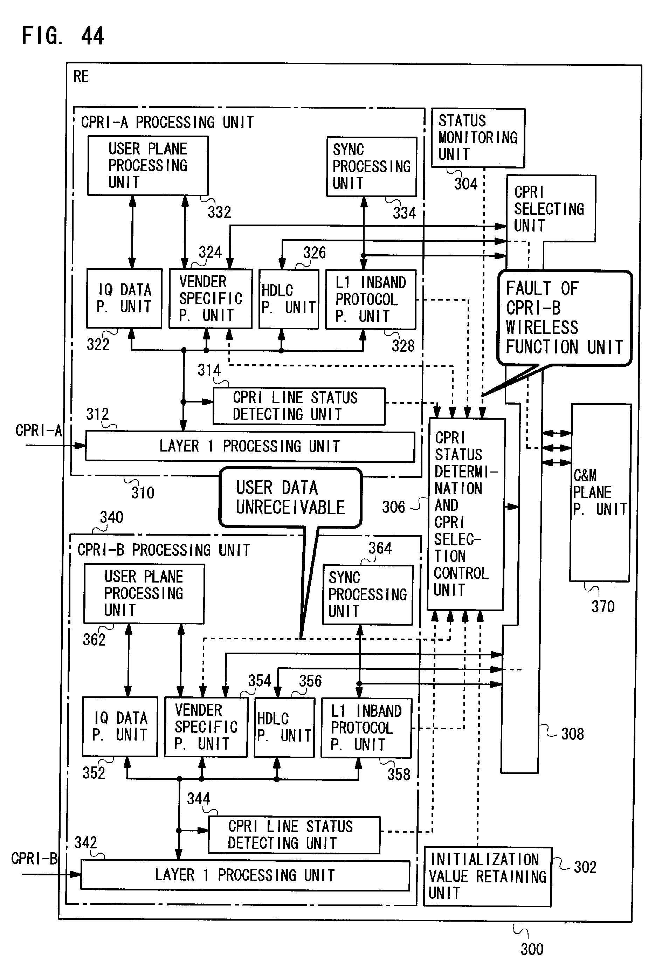

FIG. 44 is a diagram illustrating an example of the configuration of the RE when inserting the information representing the user data receivable and unreceivable status in the specified address of the Vender Specific field.

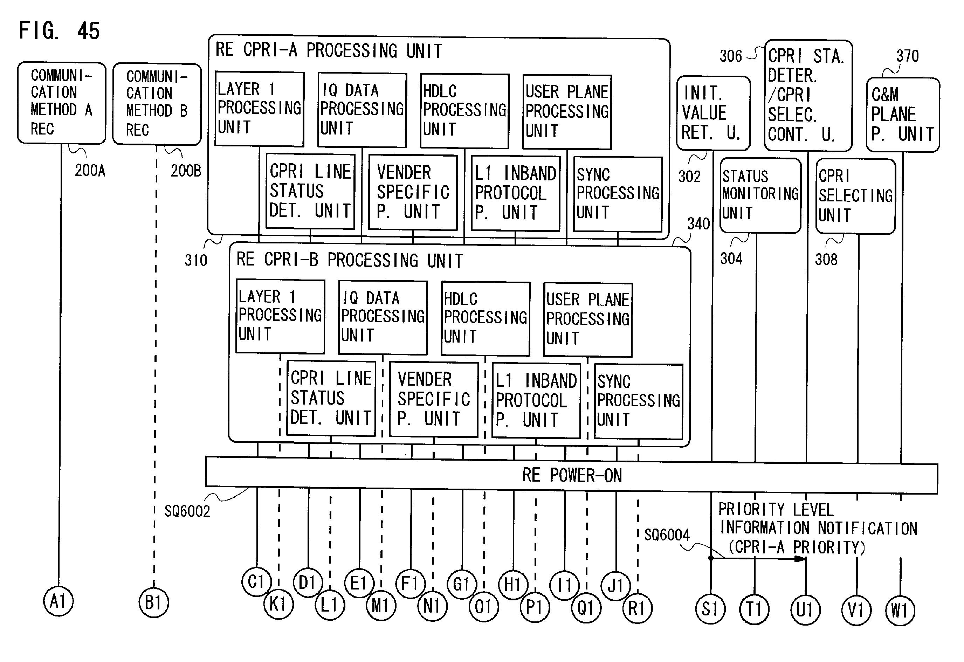

FIG. 45 is a diagram illustrating an example (1) of an operational sequence between the RE and the REC when inserting the receivability information.

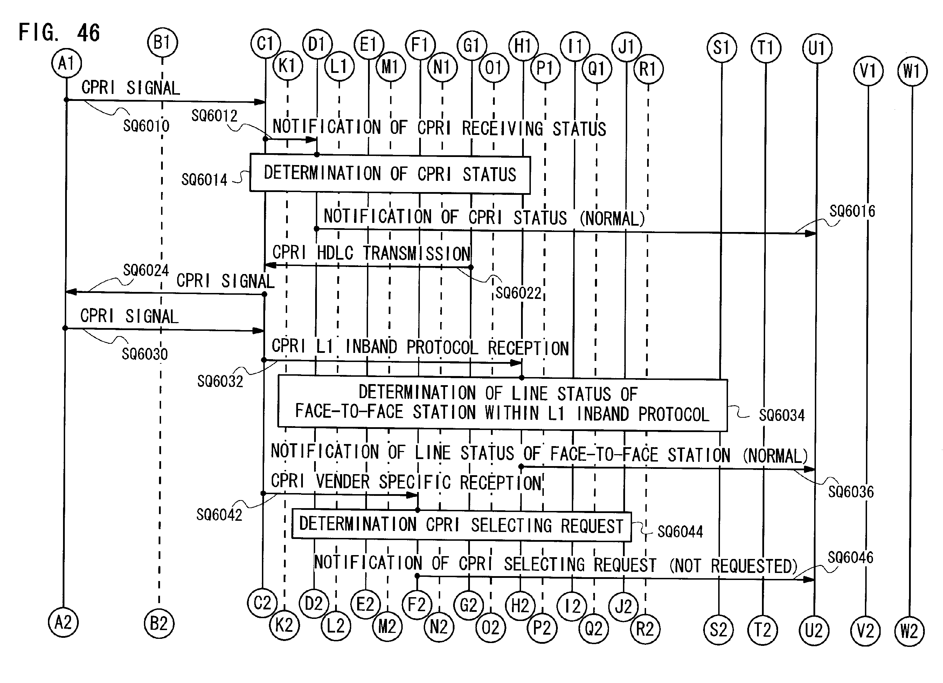

FIG. 46 is a diagram illustrating an example (2) of the operational sequence between the RE and the REC when inserting the receivability information.

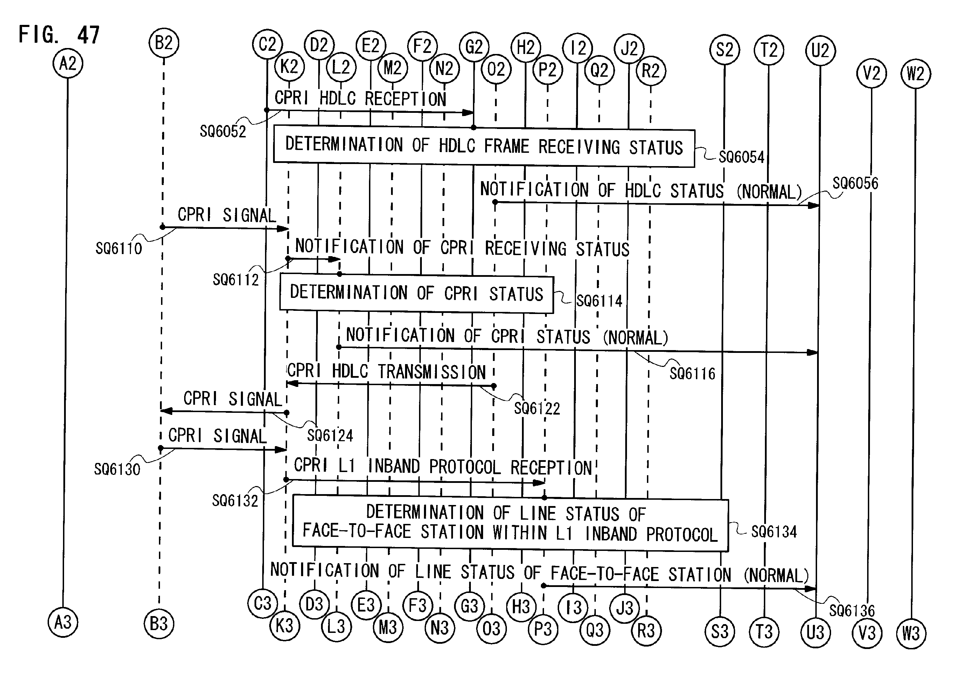

FIG. 47 is a diagram illustrating an example (3) of the operational sequence between the RE and the REC when inserting the receivability information.

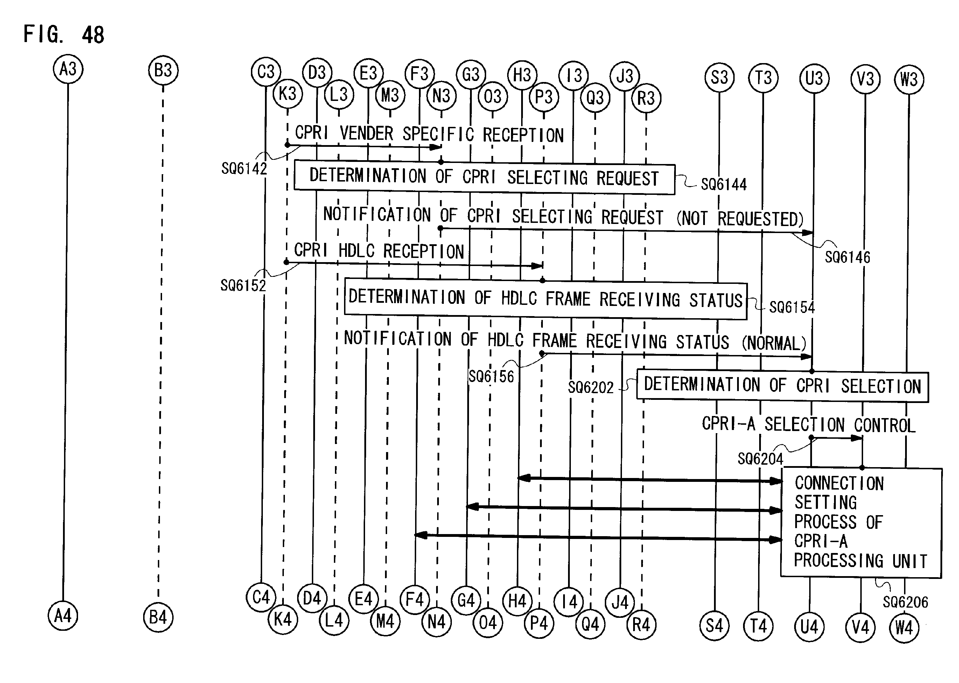

FIG. 48 is a diagram illustrating an example (4) of the operational sequence between the RE and the REC when inserting the receivability information.

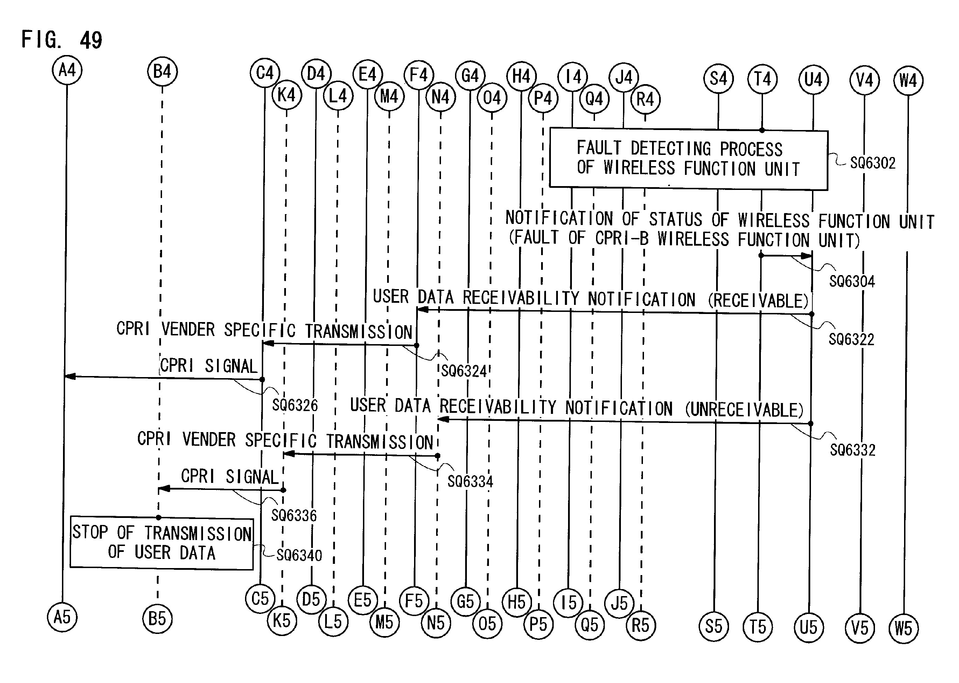

FIG. 49 is a diagram illustrating an example (5) of the operational sequence between the RE and the REC when inserting the receivability information.

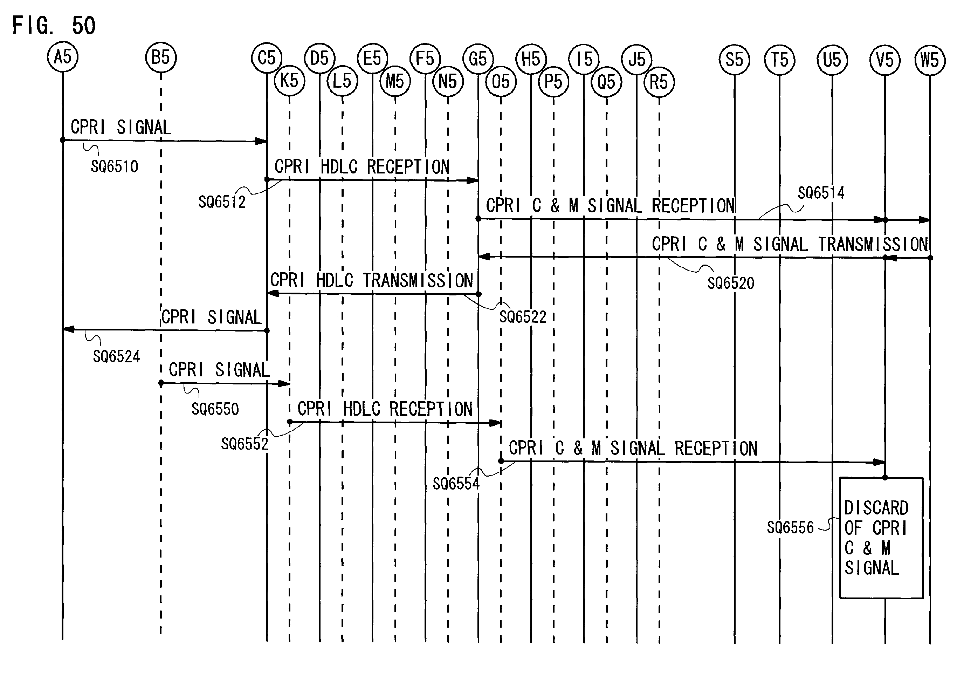

FIG. 50 is a diagram illustrating an example (6) of the operational sequence between the RE and the REC when inserting the receivability information.

An embodiment will hereinafter be described with reference to the drawings. A configuration in the embodiment is an exemplification, and the present invention is not limited to the configuration in the disclosed embodiment.

### (Example of Configuration)

### <System Architecture>

FIG. 5 is a diagram illustrating an example of a system architecture.

The system in the embodiment includes a monitoring device 100, a Radio Equipment Control (REC) 200A using a communication method A, an REC 200B using a communication method B, a Radio Equipment (RE) 300, a Mobile Station (MS) 400A using the communication method A, and a MS 400B using the communication method B. The monitoring device 100 connects with the REC 200A and the REC 200B. A connection between the REC 200A and the RE 300 and a connection between the REC 200B and RE 300 are established respectively by use of Common Public Radio Interfaces (CRPIs). The RE 300 has wireless functions based on the communication method A and the communication method B. The RE 300 is wirelessly connected to the MS 400A by use of the communication method A. The RE 300 is connected to the MS 400B by use of the communication method B. The RE 300 includes a CPRI selecting function and a Control and Management Plane (C & M Plane) processing unit. Each REC can function as a wireless control device. The RE 300 has the wireless function and can therefore function as a wireless device.

The communication method A and the communication method B are respectively arbitrary communication methods. Herein, an assumption is that the communication method A is a communication method different from the communication method B but may also be the same as the communication method B.

There may be two or more RECs connected to the RE 300.

The monitoring device 100 monitors and controls the REC 200A, the REC 200B and the RE 300. A monitor signal and a control signal from the monitoring device 100 are transmitted via the REC 200A or the REC 200B to the RE 300. The monitoring device 100 monitors and controls the RE 300 via the REC 200A or the REC 200B. The monitoring device 100 can control and monitor the RE 300 with the control and monitor signals. The RE 300 transmits and receives the control and monitor signals to and from the monitoring device 100 via at least any one of the REC 200A and the REC 200B.

### <RE (Radio Equipment)>

FIG. 6 is a diagram illustrating an example of a configuration of the RE.

The RE 300 includes a CPRI processing unit A 310, a CPRI processing unit B 340, an initialization value retaining unit 302, a status monitoring unit 304, a CPRI status determination and CPRI selection control unit 306, a CPRI selecting unit 308 and a Control and Management Plane (C & M Plane) processing unit 370. These respective components can be realized either by hardware or software, or by a combination of both. Two or more components among these components may function as one function unit. Any one of these components may functions as a plurality of function units. The same principle is applied to components, which will be described later on.

A CPRI-A processing unit 310 deals with a CPRI link between the REC 200A and the RE 300. Further, a CPRI-B processing unit 340 deals with the CPRI link between the REC 200B and the RE 300.

The CPRI-A processing unit 310 includes a Layer1 processing unit 312, a CPRI line status detecting unit 314, an IQ Data processing unit 322, a Vender Specific processing unit 324, a High-Level Data Link Control (HDLC) processing unit 326, an L1 Inband Protocol processing unit 328, a User Plane processing unit 332, and a Synchronization (SYNC) processing unit 334. The CPRI-B processing unit 340 has the same configuration as the CPRI-A processing unit 310 has.

The Layer1 processing unit 312 executes a terminating process of a physical layer (Layer1) of the CPRI link to the REC 200A.

The CPRI line status detecting unit 314 detects a line status of the physical layer (Layer1) in the CPRI link to the REC 200A. The CPRI line status detecting unit 314 can also detect the line status of Lyaer2.

A Layer1 processing unit 342 and a CPRI line status detecting unit 344 of the CPRI-B processing unit 340 have the same functions as those of the corresponding processing units of the CPRI-A processing unit 310.

The IQ Data processing unit 322, the Vender Specific processing unit 324, the HDLC processing unit 326 and the L1 Inband Protocol processing unit 328 executes the processes of the Layer2.

The IQ Data processing unit 322 executes a process of extracting and inserting IQ data (user data) contained in a Basic Frame structure of the CPRI signal.

The Vender Specific processing unit 324 executes the process of extracting and inserting Vender Specific data (which is the data unique to the Vender) contained in the Basic Frame structure of the CPRI signal. The Vender Specific data can contain information on a CPRI selection request. The Vender Specific data can also contain information about whether the user data can be received or not.

The HDLC processing unit 326 executes the process of extracting and inserting HDLC data (monitor and control data) contained in the Basic Frame structure of the CPRI signal.

The L1 Inband Protocol processing unit 328 executes the process of extracting and inserting L1 Inband Protocol data (Basic Frame number, line status information) contained in the Basic Frame structure of the CPRI signal.

An IQ Data processing unit 352, a Vender Specific processing unit 354, an HDLC processing unit 356, an L1 Inband Protocol processing unit 358 of the CPRI-B processing unit 340 respectively execute the same processes as by the corresponding processing units of the CPRI-A processing unit 310.

The User Plane processing unit 332 and the SYNC processing unit 334 execute processes of Layer3.

The User Plane processing unit 332 generates, based on the IQ data extracted by the IQ Data processing unit 322 and the Vender Specific data extracted by the Vender Specific processing unit 324, signals directed to the MS, and the IQ data and the Vender Specific data out of the signals received from the MS.

The SYNC processing unit 334 executes, based on the L1 Inband Protocol data extracted by the L1 Inband Protocol processing unit 328, a synchronizing process of a Universal Mobile Telecommunication System frame (UMTS frame).

The User Plane processing unit 362 and the SYNC processing unit 364 of the CPRI-B processing unit 340 have the same functions as those of the corresponding processing units of the CPRI-A processing unit 310.

The initialization value retaining unit 302 is stored with information about a priority level for using the CPRI link.

The status monitoring unit 304 monitors a status (about e.g., whether a fault occurs or not) of the wireless function unit on a CPRI-by-CPRI basis (according to every communication method) within the RE 300. The status of the wireless function unit includes a status of each block within the RE 300, a line status between the RE 300 and each MS, etc.

The CPRI status determination and CPRI selection control unit 306 executes the CPRI selecting process on the basis of the line status on the physical layer of the CPRI link, the line status information contained in the L1 Inband Protocol data, a CPRI selection request contained in the Vender Specific data, fault information given from the status monitoring unit 304, and the priority level information given from the initialization value retaining unit 302. Further, the CPRI status determination and CPRI selection control unit 306 generates a piece of user data receivability notification directed to the face-to-face REC. The selection may involve selecting the REC.

The CPRI selecting unit 308, in response to an instruction given from the CPRI status determination and CPRI selection control unit 306, switches over a connection path between the C & M Plane processing unit 370 and each of the Vender Specific processing unit 334, the HDLC processing unit 326 and the L1 Inband Protocol processing unit 328.

The C & M Plane processing unit 370 processes the control & monitor (C & M) signal between the REC 400A and the REC 400B. The C & M Plane processing unit 370 can execute the process of the Layer3.

### (Operational Example)

### <First Operational Example>

FIGS. 7 through 12 are diagrams each illustrating an example of an operation sequence between the RE and the REC when normally started up. A1 through W1 in FIG. 7 are connected to A1 through W1 in FIG. 8. A2 through W2 in FIG. 8 are connected to A2 through W2 in FIG. 9. A3 through W3 in FIG. 9 are connected to A3 through W3 in FIG. 10. A4 through W4 in FIG. 10 are connected to A4 through W4 in FIG. 11. A5 through W5 in FIG. 11 are connected to A5 through W5 in FIG. 12.

To begin with, a sequence example when starting up the RE 300 will be described.

When switching ON a power source of the RE 300 (FIG. 7: SQ1002), the initialization value retaining unit 302 notifies the CPRI status determination and CPRI selection control unit 306 of the priority level information (FIG. 7: SQ1004). Herein, the initialization value retaining unit 302 notifies the CPRI status determination and CPRI selection control unit 306 that the priority is given to the CPRI-A (the CPRI between the RE 300 and the REC 200A).

The REC 200A transmits the CPRI signal to the Layer1 processing unit 312 of the CPRI-A processing unit 310 (FIG. 8: SQ1010).

The Layer1 processing unit 312 of the CPRI-A processing unit 310 executes the terminating process of the physical layer (Layer1) of the CPRI link. The Layer1 processing unit 312 notifies the CPRI line status detecting unit 314 of a CPRI receiving status (FIG. 8: SQ1012).

The CPRI line status detecting unit 314 makes CPRI status determination based on the notification given from the Layer1 processing unit 312 (FIG. 8: SQ1014). The CPRI line status detecting unit 314 notifies the CPRI status determination and CPRI selection control unit 306 of the CPRI status (FIG. 8: SQ1016). Herein, the CPRI signal can be normally received from the REC 200A, and hence the CPRI line status detecting unit 314 notifies the CPRI status determination and CPRI selection control unit 306 of [Normal] as the CPRI status.

The HDLC processing unit 326 transmits the CPRI-HDLC data to the Layer1 processing unit 312 (FIG. 8: SQ1022).

The Layer1 processing unit 312 transmits the CPRI signal to the REC 200A (FIG. 8: SQ1024).

Further, the REC 200A transmits the CPRI signal to the Layer1 processing unit 312 (FIG. 8: SQ1030).

The Layer1 processing unit 312 transmits the received CPRI signal to the L1 Inband Protocol processing unit 328 (FIG. 8: SQ1032). The L1 Inband Protocol processing unit 328 extracts the L1 Inband Protocol data contained in the Basic Frame structure of the CPRI signal. The L1 Inband Protocol data contains a Basic Frame number and the line status information.

The L1 Inband Protocol processing unit 328 determines a line status of a face-to-face station based on the extracted data (FIG. 8: SQ1034). Herein, "the line status of the face-to-face station" connotes the receiving status of the CPRI signal at the REC 300A. A L1 Inband Protocol field of the CPRI signal contains information about this status. The L1 Inband Protocol processing unit 328 notifies the CPRI status determination and CPRI selection control unit 306 of the line status of the face-to-face station (FIG. 8: SQ1036). Herein, the L1 Inband Protocol processing unit 328 notifies the CPRI status determination and CPRI selection control unit 306 of [Normal].

The Layer1 processing unit 312 transmits the received CPRI signal to the Vender Specific processing unit 324 (FIG. 8: SQ1042). The Vender Specific processing unit 324 extracts the Vender Specific data contained in the Basic Frame structure of the CPRI signal. The Vender Specific data contains the information unique to the Vender.

The Vender Specific processing unit 324 checks whether or not the Vender Specific data contains the CPRI selecting request (SQ1044). The CPRI selecting request is a request for selecting the use of the C & M Plane of the CPRI-A. The Vender Specific processing unit 324 notifies the CPRI status determination and CPRI selection control unit 306 of the CPRI selecting request (FIG. 8: SQ1046). Herein, the Vender Specific processing unit 324 notifies the CPRI status determination and CPRI selection control unit 306 of [Not requested].

FIG. 13 is a diagram illustrating an example of a subchannel within a hyper frame. A UTMS wireless frame is constructed of a plurality of hyper frames. The hyper frame constitutes 64 subchannels. A type of the control signal is determined on a subchannel basis. The Vender Specific field is allocated to the subchannels 16 through p-1. An address for specifying the Vender Specific field can contain the CPRI selecting request information.

The Layer1 processing unit 312 transmits the received CPRI signal to the HDLC processing unit 326 (FIG. 9: SQ1052). The HDLC processing unit 326 extracts the HDLC data contained in the Basic Frame structure of the CPRI signal. The HDLC data is the monitor and control data.

The HDLC processing unit 326 determines an HDLC frame receiving status (FIG. 9: SQ1054). The HDLC processing unit 326 notifies the CPRI status determination and CPRI selection control unit 306 of the HDLC frame receiving status (FIG. 9: SQ1056). Herein, the HDLC processing unit 326 notifies the CPRI status determination and CPRI selection control unit 306 of [Normal].

Further, the REC 200B transmits the CPRI signal to the Layer1 processing unit 312 of the CPRI-B processing unit 310. (FIG. 9: SQ1110).

The Layer1 processing unit 342 of the CPRI-B processing unit 340 executes the process of the Layer1 with respect to the received CPRI signal. The Layer1 processing unit 342 notifies the CPRI line status detecting unit 344 of the CPRI processing unit receiving status (FIG. 9: SQ1112).

The CPRI line status detecting unit 344 determines the CPRI status on the basis of the notification given from the Layer1 processing unit 342 (FIG. 9: SQ1114). The CPRI line status detecting unit 344 notifies the CPRI status determination and CPRI selection control unit 306 of the CPRI status (FIG. 9: SQ1116). Herein, the RE 300 can normally receive the CPRI signal from the REC 200B, and hence the CPRI line status detecting unit 344 notifies the CPRI status determination and CPRI selection control unit 306 of [Normal].

The HDLC processing unit 356 transmits the CRPI-HDLC data to the Layer1 processing unit 342 (FIG. 9: SQ1122).

The Layer1 processing unit 342 transmits the CPRI signal to the REC 200B (FIG. 9: SQ1124).

Furthermore, the REC 200B transmits the CPRI signal to the Layer1 processing unit 342 (FIG. 9: SQ1130).

The Layer1 processing unit 342 transmits the received CPRI signal to the L1 Inband Protocol processing unit 358 (FIG. 9: SQ1132). The L1 Inband Protocol processing unit 358 extracts the L1 Inband Protocol data contained in the Basic Frame structure of the CPRI link.

The L1 Inband Protocol processing unit 358 determines the line status of the face-to-face station (FIG. 9: SQ1134). The L1 Inband Protocol processing unit 358 notifies the CPRI status determination and CPRI selection control unit 306 of the line status of the face-to-face station (FIG. 9: SQ1136). Herein, the L1 Inband Protocol processing unit 358 notifies the CPRI status determination and CPRI selection control unit 306 of [Normal].

The Layer1 processing unit 342 transmits the received CPRI signal to the Vender Specific processing unit 354 (FIG. 10: SQ1142). The Vender Specific processing unit 354 extracts the Vender Specific data contained in the Basic Frame structure of the CPRI signal.

The Vender Specific processing unit 354 checks whether or not the CPRI selecting request is contained in the Vender Specific data (FIG. 10: SQ1144). The Vender Specific processing unit 354 notifies the CPRI status determination and CPRI selection control unit 306 of whether there is the CPRI selecting request or not (FIG. 10: SQ1146). Herein, the Vender Specific processing unit 354 notifies the CPRI status determination and CPRI selection control unit 306 of [Not requested].

The Layer1 processing unit 342 transmits the CPRI signal to the HDLC processing unit 356 (FIG. 10: SQ1152). The HDLC processing unit 356 extracts the HDLC data contained in the Basic Frame structure of the CPRI signal. The HDLC processing unit 356 determines the HDLC frame receiving status (FIG. 10: SQ1154). The HDLC processing unit 356 notifies the CPRI status determination and CPRI selection control unit 306 of the HDLC frame receiving status (FIG. 10: SQ1156). Herein, the HDLC processing unit 356 notifies the CPRI status determination and CPRI selection control unit 306 of [Normal].

The CPRI status determination and CPRI selection control unit 306 makes, based on the acquired information, the CPRI selecting determination (FIG. 10: SQ1202). Herein, the CPRI status determination and CPRI selection control unit 306 receives the notification purporting that the priority is given to the CPRI-A (which is the CPRI between the RE 300 and the REC 200A) and also the notification purporting that the status of the CPRI-A is normal, and therefore determines that the CPRI-A is to be selected. An in-depth description of the CPRI selection determining process will be given later on. The CPRI status determination and CPRI selection control unit 306 notifies the CPRI selecting unit 308 that the CPRI-A is selected as the CPRI using C & M Plane (FIG. 10: SQ1204).

The CPRI selecting unit 308 establishes the connections between the Vender Specific processing unit 324, the HDLC processing unit 326 and the L1 Inband Protocol processing unit 328 of the CPRI-A processing unit 310 of the selected CPRI-A, and the C & M Plane processing unit 370 (FIG. 10: SQ1206). Herein, the C & M Plane processing unit 370 functions as a C & M Plane processing unit for the CPRI-A processing unit 310. With this scheme, the connection of the monitor and control signals is established between the REC 200A and the RE 300.

The status monitoring unit 304 executes a process of detecting a fault of the wireless function unit (FIG. 11: SQ1302). The status monitoring unit 304 notifies the CPRI status determination and CPRI selection control unit 306 of a status of the wireless device300 (in other words the "self-device" to which the monitoring unit 304 belongs), with respect to each CPRI (FIG. 11: SQ1304). Herein, the status monitoring unit 304 notifies the CPRI status determination and CPRI selection control unit 306 of [Normal].

The CPRI status determination and CPRI selection control unit 306 informs the Vender Specific processing unit 324 of the user data receivability notification with respect to CPRI-A (FIG. 11: SQ1322). Herein, the CPRI status determination and CPRI selection control unit 306 notifies the Vender Specific processing unit 324 of [Receivable]. The Vender Specific processing unit 324 inserts the user data receivability information with respect to CPRI-A, of which the CPRI status determination and CPRI selection control unit 306 has notified, into a specified address of the Vender Specific field. The Vender Specific processing unit 324 transmits the information in the Vender Specific field to the Layer1 processing unit 312 (FIG. 11: SQ1324). The Layer1 processing unit 312 transmits the CPRI signal containing the information in the Vender Specific field to the REC 200A (FIG. 11: SQ1326).

Further, similarly, the CPRI status determination and CPRI selection control unit 306 informs the Vender Specific processing unit 354 of the user data receivability notification with respect to CPRI-B (FIG. 11: SQ1332). Herein, the CPRI status determination and CPRI selection control unit 306 notifies the Vender Specific processing unit 354 of [Receivable]. The Vender Specific processing unit 354 inserts the user data receivability information with respect to CPRI-B, of which the CPRI status determination and CPRI selection control unit 306 has notified, into the specified address of the Vender Specific field. The Vender Specific processing unit 354 transmits the information in the Vender Specific field to the Layer1 processing unit 342 (FIG. 11: SQ1334). The Layer1 processing unit 342 transmits the CPRI signal containing the information in the Vender Specific field to the REC 200B (FIG. 11: SQ1336).

The REC 200A and the REC 200B can transmit or stop transmitting the user data on the basis of the user data receivability information sent from the RE 300. Generally, in the CPRI link with no establishment of the connection of the monitor and control signals, the communications are not performed. In the embodiment, however, the control of whether the REC transmits the user data directed to the RE or not can be done also in the CPRI link with no establishment of the connection of the monitor and control signals.

What has been discussed so far is the example of the sequence when starting up the RE 300.

Next, an example of the sequence when operating the RE 300 will be described.

The REC 200A transmits the CPRI signal to the Layer1 processing unit 312 (FIG. 12: SQ1510). The Layer1 processing unit 312 transmits the received CPRI signal to the HDLC processing unit 326 (FIG. 12: SQ1512). The HDLC processing unit 326 extracts the HDLC data contained in the Basic Frame structure of the CPRI signal. The HDLC data is the monitor and control data.

The HDLC processing unit 326 transmits the HDLC data to the CPRI selecting unit 308. The HDLC data contains a C & M signal. The CPRI selecting unit 308 confirms that the signal is received from the HDLC processing unit 326 of the CPRI-A processing unit 310. The CPRI selecting unit 308 transmits the received C & M signal (C & M Plane) to the C & M Plane processing unit 370 (FIG. 12: SQ1514). This is because the CPRI-A is the CPRI selected in the process when started up.

The C & M Plane processing unit 370 processes the C & M signal and transmits another C & M signal as a response to the former C & M signal to the CPRI selecting unit 308. The CPRI selecting unit 308 transmits the C & M signal received from the C & M Plane processing unit 370 to the HDLC processing unit 326 (FIG. 12: SQ1520). The HDLC processing unit 326 transmits the HDLC data containing the C & M signal received from the CPRI selecting unit 308 to the Layer1 processing unit 312 (FIG. 12: SQ1522). The Layer1 processing unit 312 transmits the CPRI signal containing the HDLC data to the REC 200A.

On the other hand, the REC 200B transmits the CPRI signal to the Layer1 processing unit 342 (FIG. 12: SQ1550). The Layer1 processing unit 342 transmits the received CPRI signal to the HDLC processing unit 356 (FIG. 12: SQ1552). The HDLC processing unit 356 extracts the HDLC data contained in the Basic Frame structure of the CPRI signal.

The HDLC processing unit 326 transmits the HDLC data to the CPRI selecting unit 308 (FIG. 12: SQ1554). The HDLC data contains the C & M signal. The CPRI selecting unit 308 confirms that the signal is received from the HDLC processing unit 326 of the CPRI-A processing unit 340. The CPRI selecting unit 308 does not transmit the signal received from the HDLC processing unit 356 to the C & M Plane processing unit 370 but discards this signal (FIG. 12: SQ1556). This is because the CPRI-B is the CPRI that is not selected in the process when started up.

In other words, herein, the C & M Plane processing unit 370 functions as a C & M Plane processing unit in the CPRI-A processing unit 310.

It therefore follows that the RE 300 processes only the C & M Plane (the monitor and control signals) of the signals of the selected CPRI-A. While on the other hand, the RE 300 does not process the C & M Plane of the signals of the unselected CPRI-B (which is the CPRI between the RE 300 and the REC 200B). Hence, without any decline of the monitor and control function of the monitoring device 100 with respect to the RE 300, it is feasible to reduce the number of the MPUs of the RE 300, prevent a rise in processing performance of the MPU and prevent an increase in memory capacity needed for operating the software. Accordingly, factors of hindrance against downsizing, a decrease in weight and power-saving (low power consumption) of the RE 300 are eliminated.

### <<Operation Flow of CPRI Selection Determining Process of CPRI Status Determination and CPRI Selection Control Unit>>

FIGS. 14 through 16 are diagrams each illustrating a detailed operation flow of the CPRI selection determining process of the CPRI status determination and CPRI selection control unit. [1] and [2] in FIG. 14 respectively connect with [1] in FIG. 16 and [2] in FIG. 15. [3] and [4] in FIG. 15 respectively connect with [3] and [4] in FIG. 16.

The CPRI status determination and CPRI selection control unit 306 of the RE 300, when starting the CPRI selection determining process, determines an initialization value of the CPRI given the priority (FIG. 14: S102). If the initialization value is the CPRI-B (S102; CPRI-B), the operation proceeds to step S124 (FIG. 15).

If the initialization value is the CPRI-A (S102; CPRI-A), the CPRI status determination and CPRI selection control unit 306 checks a result of determining the line status of the CPRI-A (FIG. 14: S104). If the line status of the CPRI-A is not normal (S104; NO), the CPRI-A may not be used, and hence the operation proceeds to step S124 (FIG. 15).

Whereas if the line status of the CPRI-A is normal (S104; YES), the CPRI status determination and CPRI selection control unit 306 checks the result of determining the line status of the face-to-face station within the L1 Inband Protocol (S106). If the line status of the face-to-face station of the CPRI-A is not normal (S106; NO), the operation proceeds to step S124 (FIG. 15).

If the line status of the face-to-face station of the CPRI-A is normal (S106; YES), the CPRI status determination and CPRI selection control unit 306 checks the result of determining the HDLC frame receiving status (S108). Whereas if the HDLC frame receiving status of the CPRI-A is not normal (S108; NO), the operation proceeds to step S124 (FIG. 15).

If the HDLC frame receiving status of the CPRI-A is normal (S108; YES), the CPRI status determination and CPRI selection control unit 306 decides that the CPRI-A is normal and sets this purport (S110).

The CPRI status determination and CPRI selection control unit 306 checks whether or not the CPRI-A is requested as the CPRI to be used (S112). If the CPRI-A is not requested as the CPRI to be used (S112; NO), the operation proceeds to step S124 (FIG. 15).

If the CPRI-A is requested as the CPRI for use (S112; YES), the CPRI status determination and CPRI selection control unit 306 performs the selection control of the CPRI-A (FIG. 16: S142).

In step S124, the CPRI status determination and CPRI selection control unit 306 checks the result of determining the line status of the CPRI-B (FIG. 15: S124). If the line status of the CPRI-B is not normal (S124; NO), the CPRI-B may not be employed, and therefore the operation proceeds to step S134.

Whereas if the line status of the CPRI-B is normal (S124; YES), the CPRI status determination and CPRI selection control unit 306 checks the result of determining the line status of the face-to-face station within the L1 Inband Protocol (FIG. 15: S126). If the line status of the face-to-face station of the CPRI-B is not normal (S126; NO), the operation proceeds to step S134.

Whereas if the line status of the face-to-face station of the CPRI-B is normal (S126; YES), the CPRI status determination and CPRI selection control unit 306 checks the result of determining the HDLC frame receiving status (FIG. 15: S128). If the HDLC frame receiving status of the CPRI-B is not normal (S128; NO), the operation proceeds to step S134.

Whereas if the HDLC frame receiving status of the CPRI-B is normal (S128; YES), the CPRI status determination and CPRI selection control unit 306 checks whether or not the CPRI-B is requested as the CPRI for use (S132). If the CPRI-B is not requested as the CPRI for use (S132; NO), the operation proceeds to step S134.

If the CPRI-B is requested as the CPRI for use (S132; YES), the CPRI status determination and CPRI selection control unit 306 executes the selection control of the CPRI-B (FIG. 16: S144).

In step S134, the CPRI status determination and CPRI selection control unit 306 checks whether the CPRI-A is set normal or not.

If the CPRI-A is set normal (S134; YES), the CPRI status determination and CPRI selection control unit 306 executes the selection control of the CPRI-A (FIG. 16: S142). Whereas if the CPRI-A is not set normal (S134; NO), the CPRI status determination and CPRI selection control unit 306 conducts the selection control of the CPRI-B (FIG. 16: S142).

The status monitoring unit 304 monitors the status of the wireless function unit of the CPRI-A (S152). The status monitoring unit 304, when detecting a fault of the wireless function unit of the CPRI-A, notifies the CPRI status determination and CPRI selection control unit 306 that the fault occurs in the wireless function unit of the CPRI-A (S154).

Moreover, the status monitoring unit 304 monitors the status of the wireless function unit of the CPRI-B (S162). The status monitoring unit 304, when detecting the fault of the wireless function unit of the CPRI-B, notifies the CPRI status determination and CPRI selection control unit 306 that the fault occurs in the wireless function unit of the CPRI-B (S164).

### <Second Operational Example>

Herein, an operational example when detecting a LOS (Loss of Signal) will be described. The second operational example has common points to the first operational example. Accordingly, the discussion will be focused mainly on different points.

### <<Outline>>

FIG. 17 is a diagram illustrating a sequence example of an outline of the operation when detecting the LOS.

Upon switching ON the power source of the RE 300 (SQ202), an attempt of establishing the links respectively with the REC 200A and the REC 200B is made. The phrase "the establishment of the link" connotes a status in which the information about each protocol of the layer can be transmitted and received.

The RE 300, if failing to establish the Lyaer1 link with the REC 200A (SQ212), detects the LOS (SQ214). The "LOS" implies that the CPRI signal may not be received from the REC 200A.

While on the other hand, it is assumed that the RE 300 succeeds in establishing the Layer1 link with the REC 200B (SQ222) and succeeds in establishing the Layer2 link with the REC 200B (SQ242).

The RE 300 executes the CPRI selecting process (SQ254). Herein, the RE 300, because of failing to establish the link with the REC 200A and detecting the LOS, selects the CPRI-B as the CPRI using C & M Plane. The RE 300 establishes the Layer3 link with REC 200B (SQ282).

The C & M Plane processing unit 370 of the RE 300 is thereby connected to the CPRI-B processing unit 340. The monitor and control signals between the monitoring device 100 and the RE 300 are transmitted and received via the REC 200B.

### <<Example of Configuration>>

FIG. 18 is a diagram illustrating an example of a configuration of the RE when detecting the LOS.

The CPRI line status detecting unit 314 of the RE 300, if unable to detect the CPRI signal from the REC 200A, considers that the signal from the REC 200A is the LOS, and notifies the CPRI status determination and CPRI selection control unit 306 of this purport. The CPRI status determination and CPRI selection control unit 306 makes use of the information on the occasion of the CPRI selecting process.

### <<Operation Sequence>>

FIGS. 19 through 24 are diagrams each illustrating an example of the operation sequence between the RE and the REC when detecting the LOS. A1 through W1 in FIG. 19 are connected to A1 through W1 in FIG. 20. A2 through W2 in FIG. 20 are connected to A2 through W2 in FIG. 21. A3 through W3 in FIG. 21 are connected to A3 through W3 in FIG. 22. A4 through W4 in FIG. 22 are connected to A4 through W4 in FIG. 23. A5 through W5 in FIG. 23 are connected to A5 through W5 in FIG. 24.

At first, the sequence example when starting up the RE 300 on the occasion of detecting the LOS will be described.

Upon switching ON the power source of the RE 300 (FIG. 19: SQ2002), the initialization value retaining unit 302 notifies the CPRI status determination and CPRI selection control unit 306 of information on the priority level (FIG. 19: SQ2004). Herein, the initialization value retaining unit 302 notifies the CPRI status determination and CPRI selection control unit 306 of information that the priority is given to the CPRI-A (the CPRI between the RE 300 and the REC 200A).

The REC 200A transmits the CPRI signal to the Layer1 processing unit 312 of the CPRI-A processing unit 310 (FIG. 20: SQ2010).

An assumption is, however, such that some fault occurs between the REC 200A and the RE 300 with the result that the RE 300 may not receive the CPRI signal transmitted by the REC 200A.

The Layer1 processing unit 312 of the CPRI-A processing unit 310 notifies the CPRI line status detecting unit 314 of a purport (the CPRI receiving status) that the CPRI signal is not yet received (FIG. 20: SQ2012).

The CPRI line status detecting unit 314 determines the CPRI status on the basis of the notification from the Layer1 processing unit 312 (FIG. 20: SQ2014). The CPRI line status detecting unit 314 notifies the CPRI status determination and CPRI selection control unit 306 of the CPRI status (FIG. 20: SQ2016). Herein, the CPRI signal may not be received from the REC 200A (LOS), and hence the CPRI line status detecting unit 314 notifies the CPRI status determination and CPRI selection control unit 306 of [LOS (Loss of Signal)] as the CPRI status.

The CPRI-A processing unit 310 stops the process due to the LOS detection of the CPRI-A. This is because the RE 300 may not receive the signal from the REC 200A.

The operations in SQ2110 through SQ2156 are the same as the operations in SQ1110 through SQ1156 in the first operational example.

The CPRI status determination and CPRI selection control unit 306 makes the CPRI selecting determination on the basis of the acquired information (FIG. 22: SQ2202). Herein, the CPRI status determination and CPRI selection control unit 306 is, though notified of the purport that the priority is given to the CPRI-A (the CPRI between the RE 300 and the REC 200A) when started up, also notified of the purport that the status of the CPRI-A is the LOS and is therefore disabled from selecting the CPRI-A. On the other hand, the CPRI status determination and CPRI selection control unit 306 has received the notification purporting that the status of the CPRI-B is normal and therefore determines that the CPRI-B be selected. The CPRI status determination and CPRI selection control unit 306 notifies the CPRI selecting unit 308 that the CPRI-B is to be selected as the CPRI using the C & M Plane ((FIG. 22: SQ2204).

The CPRI selecting unit 308 connects the Vender Specific processing unit 354, the HDLC processing unit 356 and the L1 Inband Protocol processing unit 358 of the CPRI-B processing unit 340 of the selected CPRI-B to the C & M Plane processing unit 370 (FIG. 22: SQ2206). Herein, the C & M Plane processing unit 370 functions as the C & M Plane processing unit of the CPRI-B processing unit 340.

The status monitoring unit 304 executes the process of detecting the fault in the wireless function unit (FIG. 23: SQ2302). The status monitoring unit 304 notifies the CPRI status determination and CPRI selection control unit 306 of the status of the self-device (RE 300) with respect to each CPRI (FIG. 23: SQ2304). Herein, the status monitoring unit 304 notifies the CPRI status determination and CPRI selection control unit 306 of [Normal].

The operations in SQ2322 through SQ2336 in FIG. 23 are the same as the operations in SQ1322 through SQ 1336 in the first operational example.

What has been discussed so far is the sequence example when starting up the RE 300 on the occasion of detecting the LOS.

Next, the sequence example when operating the RE 300 on the occasion of detecting the LOS will be described.

The REC 200B transmits the CPRI signal to the Layer1 processing unit 342 (FIG. 24: SQ2550). The Layer1 processing unit 342 transmits the received CPRI signal to the HDLC processing unit 356 (FIG. 24: SQ2552). The HDLC processing unit 356 extracts the HDLC data contained in the Basic Frame structure of the CPRI signal. The HDLC data is the monitor and control data.

The HDLC processing unit 356 transmits the HDLC data to the CPRI selecting unit 308. The HDLC data contains the C & M signal. The CPRI selecting unit 308 confirms that the signal is received from the HDLC processing unit 356 of the CPRI-B processing unit 340. The CPRI selecting unit 308 transmits the received C & M signal (C & M plane) to the C & M Plane processing unit 370 (FIG. 24: SQ2554). It is because the CPRI-B is the CPRI selected in the process when started up.

The C & M Plane processing unit 370 processes the C & M signal and transmits another C & M signal as a response to the former C & M signal to the CPRI selecting unit 308. The CPRI selecting unit 308 transmits the C & M signal received from the C & M Plane processing unit 370 to the HDLC processing unit 356 (FIG. 24: SQ2560). The HDLC processing unit 356 transmits the HDLC data containing the C & M signal received from the CPRI selecting unit 308 to the Layer1 processing unit 342 (FIG. 22: SQ2562). The Layer1 processing unit 342 transmits the CPRI signal containing the HDLC data to the REC 200B.

Herein, the C & M Plane processing unit 370 functions as a C & M Plane processing unit in the CPRI-B processing unit 340. With this scheme, the RE 300 processes only the C & M Plane (the monitor and control signals) of the signals of the selected CPRI-B.

The RE 300 can select the C & M Plane of the CPRI exhibiting the better receiving status by use of the result of detecting the line status of the CPRI. The monitoring device 100 can transmit and receive the monitor and control signals to and from the RE 300 via the CPRI exhibiting the better receiving status on the side of the RE 300.

### <Third Operational Example>

What is herein discussed is an operational example on the occasion of detecting a LOF (Loss of Frame). The third operational example has common points to the first operational example and the second operational example. Accordingly, the discussion will be focused mainly on different points.

### <<Outline>>

FIG. 25 is a diagram illustrating a sequence example of an outline of the operation when detecting the LOF.

Upon switching ON the power source of the RE 300 (SQ302), the attempt of establishing the links respectively with the REC 200A and the REC 200B is made.

The RE 300 establishes the Layer1 link with the REC 200A (SQ312), thereby establishing the Layer1 link (SQ322).

While on the other hand, it is assumed that the RE 300 established the Layer1 link with the REC 200B (SQ322) but fails to establish the Layer2 link (SQ342).

The REC 200B, if unable to normally receive the CPRI signal form the RE 300, gets a CPRI line alarm included in [Reset and Alarm] information in the L1 Inband Protocol field of the CPRI, and thus transmits the information to the RE 300. The CPRI line alarm contains the LOF (Loss of Frame) information. The LOF connotes that the CPRI signal transmitted by the RE 300 does not normally reach the REC. The RE 300 can check from the CPRI line information whether the CPRI signal transmitted by the RE 300 itself to the REC 200B normally reaches the REC. or not.

The RE 300 detects the LOF by confirming that the LOF is described in the CPRI line alarm of the [Reset and Alarm] information in the L1 Inband Protocol field. Namely, the RE 300 recognizes that the establishment of the Layer2 link with the REC 200B gets into a failure.

The RE 300 executes the CPRI selecting process (SQ354). Herein, the RE 300, because of failing to establish the Layer2 link with the REC 200B, selects the CPRI-A as the CPRI using the C & M Plane. The RE 300 establishes the Layer3 link with the REC 200A (SQ372).

The C & M Plane processing unit 370 of the RE 300 is thereby connected to the CPRI-A processing unit 310. The monitor and control signals between the monitoring device 100 and the RE 300 are transmitted and received via the REC 200A.

### <<Example of Configuration>>

FIG. 26 is a diagram illustrating an example of the RE on the occasion of detecting the LOF.

The L1 Inband Protocol processing unit 358 of the RE 300, upon detecting that the LOF is described in the [Reset and Alarm] information in the L1 Inband Protocol field of the CPRI signal from the REC 200B, notifies the CPRI status determination and CPRI selection control unit 306 that the CPRI signal to the REC 200B is the LOF. The CPRI status determination and CPRI selection control unit 306 makes use of this information on the occasion of the CPRI selecting process.

### <<Operation Sequence>>

FIGS. 27 through 32 are diagrams each illustrating an example of the operation sequence between the RE and the REC when detecting the LOF. A1 through W1 in FIG. 27 are connected to A1 through W1 in FIG. 28. A2 through W2 in FIG. 28 are connected to A2 through W2 in FIG. 29. A3 through W3 in FIG. 29 are connected to A3 through W3 in FIG. 30. A4 through W4 in FIG. 30 are connected to A4 through W4 in FIG. 31. A5 through W5 in FIG. 31 are connected to A5 through W5 in FIG. 32.

At first, the sequence example when starting up the RE 300 on the occasion of detecting the LOF will be described.

The operations in SQ3002 in FIG. 27 through SQ3056 in FIG. 29 are the same as the operations in SQ1002 through SQ1056 in the first operational example.

The REC 200B transmits the CPRI signal to the Layer1 processing unit 342 of the CPRI-B processing unit 340 (FIG. 29: SQ3110).

The Layer1 processing unit 342 of the CPRI-B processing unit 340 executes the Layer1 process about the received CPRI signal. The Layer1 processing unit 342 notifies the CPRI line status detecting unit 344 of the CPRI receiving status (FIG. 29: SQ3112).

The CPRI line status detecting unit 344 determines the CPRI status on the basis of the notification sent from the Layer1 processing unit 342 (FIG. 29: SQ3114). The CPRI line status detecting unit 344 notifies the CPRI status determination and CPRI selection control unit 306 of the CPRI status (FIG. 29: SQ3116). Herein, the RE 300 can normally receive the CPRI signal from the REC 200B, and hence the CPRI line status detecting unit 344 notifies the CPRI status determination and CPRI selection control unit 306 of [Normal].

The HDLC processing unit 356 transmits the CPRI-HDLC data to the Layer1 processing unit 342 (FIG. 29: SQ3122).

The Layer1 processing unit 342 transmits the CPRI signal to the REC 200B (FIG. 29: SQ3124).

Further, the REC 200B transmits the CPRI signal to the Layer1 processing unit 342 (FIG. 29: SQ3130).

The Layer1 processing unit 342 transmits the received CPRI signal to the L1 Inband Protocol processing unit 358 (FIG. 29: SQ3132). The L1 Inband Protocol processing unit 358 extracts the L1 Inband Protocol data contained in the Basic Frame structure of the CPRI link.

The L1 Inband Protocol processing unit 358 determines the line status of the face-to-face station (FIG. 29: SQ3134). The L1 Inband Protocol processing unit 358 notifies the CPRI status determination and CPRI selection control unit 306 of the line status of the face-to-face station (FIG. 29: SQ3136). Herein, an assumption is that the LOF (Loss of Frame) is contained in the [Reset and Alarm] information in the L1 Inband Protocol field. The LOF implies that the CPRI signal transmitted by the RE 300 does not normally reach the REC 200B. The L1 Inband Protocol processing unit 358 notifies the CPRI status determination and CPRI selection control unit 306 of the [LOF].

The Layer1 processing unit 342 transmits the received CPRI signal to the Vender Specific processing unit 354 (FIG. 30: SQ3142). The Vender Specific processing unit 354 extracts the Vender Specific data contained in the Basic Frame structure of the CPRI signal.

The Vender Specific processing unit 354 checks whether or not the CPRI selecting request is contained in the Vender Specific data (FIG. 30: SQ3144). The Vender Specific processing unit 354 notifies the CPRI status determination and CPRI selection control unit 306 of whether there is the CPRI selecting request or not (FIG. 30: SQ3146). Herein, the Vender Specific processing unit 354 notifies the CPRI status determination and CPRI selection control unit 306 of [Not requested].

The Layer1 processing unit 342 transmits the CPRI signal to the HDLC processing unit 356 (FIG. 30: SQ3152). The HDLC processing unit 356 extracts the HDLC data contained in the Basic Frame structure of the CPRI signal. The HDLC processing unit 356 determines the HDLC frame receiving status (FIG. 30: SQ3154). The HDLC processing unit 356 notifies the CPRI status determination and CPRI selection control unit 306 of the HDLC frame receiving status (FIG. 30: SQ3156). Herein, the HDLC processing unit 356 notifies the CPRI status determination and CPRI selection control unit 306 of [Normal].

The CPRI status determination and CPRI selection control unit 306 makes the CPRI selecting determination on the basis of the acquired information (FIG. 30: SQ3202). Herein, the CPRI status determination and CPRI selection control unit 306 receives the notification purporting that the priority is given to the CPRI-A (the CPRI between the RE 300 and the REC 200A) and also the notification purporting that the status of the CPRI-A is normal, and therefore determines that the CPRI-A be selected. The CPRI status determination and CPRI selection control unit 306 notifies the CPRI selecting unit 308 that the CPRI-A is to be selected as the CPRI using the C & M Plane (FIG. 30: SQ3204).

The CPRI selecting unit 308 connects the Vender Specific processing unit 324, the HDLC processing unit 326 and the L1 Inband Protocol processing unit 328 of the CPRI-A processing unit 310 of the selected CPRI-A to the C & M Plane processing unit 370 (FIG. 30: SQ3206). Herein, the C & M Plane processing unit 370 functions as the C & M Plane processing unit of the CPRI-A processing unit 310.

The status monitoring unit 304 executes a process of detecting the fault of the wireless function unit (FIG. 31: SQ3302). The status monitoring unit 304 notifies the CPRI status determination and CPRI selection control unit 306 of the status of the self-device (RE 300) with respect to each CPRI (FIG. 31: SQ3304). Herein, the status monitoring unit 304 notifies the CPRI status determination and CPRI selection control unit 306 of [Normal].

The operations in SQ3322 through SQ3336 in FIG. 31 are the same as the operations in SQ1322 through SQ1336 in the first operational example.

What has been discussed so far is the sequence example when starting up the RE 300.

The sequence (FIG. 32: SQ3510 through SQ3556) when operating the RE 300 is the same as SQ1510 through SQ1556 in the first operational example.

The RE 300 extracts the CPRI line alarm contained in the [Reset and Alarm] information in the L1 Inband Protocol field of the received CPRI signal, thereby making it feasible to detect that the CPRI signal transmitted by the self-device normally reaches the REC. The RE 300 can select the C & M Plane of the CPRI exhibiting the better receiving status at the REC by making use of the result of extracting the CPRI line alarm such as the LOF. The monitoring device 100 can transmit and receive the monitor and control signals to and from the RE 300 via the CPRI exhibiting the better receiving status on the REC side.

### <Fourth Operational Example>

Herein, an operational example on the occasion of making use of the CPRI selecting request will be discussed. The fourth operational example has common points to the first operational example, the second operational example and the third operational example. Accordingly, the discussion will be focused mainly on different points.

### <<Outline>>

FIG. 33 is a diagram illustrating a sequence example of an outline of the operation when making use of the CPRI selecting request.

Upon switching ON the power source of the RE 300 (SQ402), the attempt of establishing the links respectively with the REC 200A and the REC 200B is made.

The RE 300 establishes the Layer1 link with the REC 200A (SQ412), thereby establishing the Layer1 link (SQ432).

Further, it is assumed that the RE 300 established the Layer1 link with the REC 200B (SQ422) but fails to establish the Layer2 link (SQ442).

Herein, an assumption is that the [CPRI selecting request] is included in the Vender Specific field of the CPRI signal sent from the REC 200A. The CPRI selecting request given from the REC 200A is a request for selecting the use of the C & M Plane of the CPRI-A. The information in Vender Specific field can be transmitted and received between the REC and the RE just when the Layer2 link is established.

The RE 300 detects the CPRI selecting request contained in the CPRI signal transmitted from the REC 200A (SQ452).

The RE 300 executes the CPRI selecting process (SQ454). Herein, the RE 300 has detected the CPRI selecting request given from the REC 200A and therefore selects the CPRI-A as the CPRI using the C & M Plane. The RE 300 establishes the Layer3 link with the REC 200A (SQ472).

The C & M Plane processing unit 370 of the RE 300 is thereby connected to the CPRI-A processing unit 310. The monitor and control signals between the monitoring device 100 and the RE 300 are transmitted and received via the REC 200A.

### <Example of Configuration>

FIG. 34 is a diagram illustrating an example of the configuration of the RE on the occasion of making use of the CPRI selecting request.

The Vender Specific processing unit 324 of the RE 300, when detecting the [CPRI selecting request] given from the REC 200A, notifies the CPRI status determination and CPRI selection control unit 306 of [Requested] for the CPRI selection from the REC 200A. The CPRI status determination and CPRI selection control unit 306 utilizes this information on the occasion of the CPRI selecting process.

### <<Operation Sequence>>

FIGS. 35 through 40 are diagrams each illustrating an example of the operation sequence between the RE and the REC when normally started up. A1 through W1 in FIG. 35 are connected to A1 through W1 in FIG. 36. A2 through W2 in FIG. 36 are connected to A2 through W2 in FIG. 37. A3 through W3 in FIG. 37 are connected to A3 through W3 in FIG. 38. A4 through W4 in FIG. 38 are connected to A4 through W4 in FIG. 39. A5 through W5 in FIG. 39 are connected to A5 through W5 in FIG. 40.

At first, the sequence example when starting up the RE 300 will be described.

When switching ON the power source of the RE 300 (FIG. 35: SQ4002), the initialization value retaining unit 302 notifies the CPRI status determination and CPRI selection control unit 306 of the priority level information (FIG. 35: SQ4004). Herein, the initialization value retaining unit 302 notifies the CPRI status determination and CPRI selection control unit 306 that the priority is given to the CPRI-A (the CPRI between the RE 300 and the REC 200A).

The REC 200A transmits the CPRI signal to the Layer1 processing unit 312 of the CPRI-A processing unit 310 (FIG. 36: SQ4010).

The Layer1 processing unit 312 of the CPRI-A processing unit 310 executes the terminating process of the physical layer (Layer1) of the CPRI link. The Layer1 processing unit 312 notifies the CPRI line status detecting unit 314 of the CPRI receiving status (FIG. 36: SQ4012).

The CPRI line status detecting unit 314 makes the CPRI status determination based on the notification given from the Layer1 processing unit 312 (FIG. 36: SQ4014). The CPRI line status detecting unit 314 notifies the CPRI status determination and CPRI selection control unit 306 of the CPRI status (FIG. 36: SQ4016). Herein, the CPRI signal can be normally received from the REC 200A, and hence the CPRI line status detecting unit 314 notifies the CPRI status determination and CPRI selection control unit 306 of [Normal] as the CPRI status.

The HDLC processing unit 326 transmits the CPRI-HDLC data to the Layer1 processing unit 312 (FIG. 36: SQ4022).

The Layer1 processing unit 312 transmits the CPRI signal to the REC 200A (FIG. 36: SQ4024).

Further, the REC 200A transmits the CPRI signal to the Layer1 processing unit 312 (FIG. 36: SQ4030).

The Layer1 processing unit 312 transmits the received CPRI signal to the L1 Inband Protocol processing unit 328 (FIG. 36: SQ4032). The L1 Inband Protocol processing unit 328 extracts the L1 Inband Protocol data contained in the Basic Frame structure of the CPRI signal.

The L1 Inband Protocol processing unit 328 determines the line status of the face-to-face station based on the extracted data (FIG. 36: SQ4034). The L1 Inband Protocol field of the CPRI signal contains the information about this status. The L1 Inband Protocol processing unit 328 notifies the CPRI status determination and CPRI selection control unit 306 of the line status of the face-to-face station (FIG. 36 SQ4036). Herein, the L1 Inband Protocol processing unit 328 notifies the CPRI status determination and CPRI selection control unit 306 of [Normal].

The Layer1 processing unit 312 transmits the received CPRI signal to the Vender Specific processing unit 324 (FIG. 36: SQ4042). The Vender Specific processing unit 324 extracts the Vender Specific data contained in the Basic Frame structure of the CPRI signal.

The Vender Specific processing unit 324 checks whether or not the Vender Specific data contains the CPRI selecting request (SQ4044). The CPRI selecting request is the request for selecting the use of the C & M Plane of the CPRI-A. The CPRI selecting request can be inserted into a specified address of the Vender Specific field. The Vender Specific processing unit 324 notifies the CPRI status determination and CPRI selection control unit 306 of the CPRI selecting request (FIG. 36: SQ4046). Herein, the Vender Specific processing unit 324 notifies the CPRI status determination and CPRI selection control unit 306 of [Requested].

The Layer1 processing unit 312 transmits the received CPRI signal to the HDLC processing unit 326 (FIG. 37: SQ4052). The HDLC processing unit 326 extracts the HDLC data contained in the Basic Frame structure of the CPRI signal. The HDLC data is the monitor and control data.

The HDLC processing unit 326 determines the HDLC frame receiving status (FIG. 37: SQ4054). The HDLC processing unit 326 notifies the CPRI status determination and CPRI selection control unit 306 of the HDLC frame receiving status (FIG. 37: SQ4056). Herein, the HDLC processing unit 326 notifies the CPRI status determination and CPRI selection control unit 306 of [Normal].

The operations in SQ4110 in FIG. 37 through SQ4156 in FIG. 38 are the same as the operations in SQ1110 through SQ1156 in the first operational example.

The CPRI status determination and CPRI selection control unit 306 makes, based on the acquired information, the CPRI selecting determination (FIG. 38: SQ4202). Herein, the CPRI status determination and CPRI selection control unit 306 receives the notification purporting that the priority is given to the CPRI-A (which is the CPRI between the RE 300 and the REC 200A) and also the notification purporting that the status of the CPRI-A is normal, and, the CPRI selecting request of the CPRI-A being [Requested], therefore determines that the CPRI-A is to be selected. The CPRI status determination and CPRI selection control unit 306 notifies the CPRI selecting unit 308 that the CPRI-A is selected as the CPRI using C & M Plane (FIG. 38: SQ4204).

The CPRI selecting unit 308 connects the Vender Specific processing unit 324, the HDLC processing unit 326 and the L1 Inband Protocol processing unit 328 of the CPRI-A processing unit 310 of the selected CPRI-A to the C & M Plane processing unit 370 (FIG. 38: SQ4206). Herein, the C & M Plane processing unit 370 functions as a C & M Plane processing unit for the CPRI-A processing unit 310.

The status monitoring unit 304 executes a process of detecting a fault of the wireless function unit (FIG. 39: SQ4302). The status monitoring unit 304 notifies the CPRI status determination and CPRI selection control unit 306 of a status of the self-device (RE 300) with respect to each CPRI (FIG. 39: SQ4304). Herein, the status monitoring unit 304 notifies the CPRI status determination and CPRI selection control unit 306 of [Normal].

The operations in SQ4322 through SQ4336 in FIG. 39 are the same as the operations in SQ1322 through SQ1336 in the first operational example.

What has been discussed so far is the sequence example when starting up the RE 300 on the occasion of making use of the CPRI selecting request.

The sequence (FIG. 40: SQ4510 through SQ4556) when operating the RE 300 is the same as SQ1510 through SQ1556 in the first operational example.

The REC inserts the information representing the CRPI selecting request into the Vender Specific field of the CPRI signal, thereby enabling the REC to make the CPRI selecting request. Moreover, the information representing the CRPI selecting request is inserted into the Vender Specific field, thereby enabling the RE to execute the CPRI selecting process just when the Layer2 link is established.

### <Fifth Operational Example>

Herein, an operational example on the occasion of storing the priority level information in the initialization value retaining unit, will be described. The fifth operational example has common points to the first operational example, the second operational example, the third operational example and the fourth operational example. Accordingly, the discussion will be focused mainly on different points.

### <<Outline>>

FIG. 41 is a diagram illustrating a sequence example of an outline of the operation when storing the priority level information in the initialization value retaining unit.

Upon switching ON the power source of the RE 300 (SQ502), the priority level information is read from the initialization value retaining unit 302 (SQ504). Herein, it is assumed that a priority level 1 is set for the CPRI-A and a priority level 2 is set for the CPRI-B.

Further, the attempt of establishing the links respectively with the REC 200A and the REC 200B is made.

The RE 300 establishes the Layer1 link (SQ512) and the Layer2 link with the REC 200A (SQ532).

Moreover, the RE 300 establishes the Layer1 link (SQ522) and the Layer2 link with the REC 200B (SQ542).

The RE 300 executes the CPRI selecting process (SQ554). Herein, the RE 300 establishes the link with the REC 200A and the link with the REC 200B but selects, because of the CPRI-A exhibiting a higher priority level, the CPRI-A as the CPRI using the C & M Plane. The RE 300 establishes the Layer3 link with the REC 200A (SQ572).

The C & M Plane processing unit 370 of the RE 300 is thereby connected to the CPRI-A processing unit 310. The monitor and control signals between the monitoring device 100 and the RE 300 are transmitted and received via the REC 200A.

### <<Example of Configuration>>

FIG. 42 is a diagram illustrating an example of a configuration of the RE on the occasion of storing the priority level information in the initialization value retaining unit.

The initialization value retaining unit 302 of the RE 300 stores, as pieces of priority level information, a priority level 1 for the CPRI-A and a priority level 2 for the CPRI-B. The CPRI status determination and CPRI selection control unit 306 reads the priority level information from the initialization value retaining unit 302 on the occasion of the CPRI selecting process and can make use of this information.

The RE 300 retains the priority level information in the initialization value retaining unit 302, thereby enabling the CPRI for use to be determined in a status till establishing the Layer2 link of the CPRI.

### <Sixth Operational Example>

Made herein is an explanation of the operational example when information representing a receivable or unreceivable status of the user data is inserted into a specified address of the Vender Specific field. The sixth operational example has common points to the first operational example, the second operational example, the third operational example, the fourth operational example and the fifth operational example. Accordingly, the discussion will be focused mainly on different points.

Normally, the REC, in the case of detecting the fault etc of the RE, stops transmitting the user data to the RE from the REC itself. The REC receives the information about the fault of the RE by way of the signal of the C & M Plane, thereby detecting the status of the fault etc of the RE. In the embodiment, however, the CPRI using none of the C & M Plane occurs, and it is therefore desirable that the REC detects the status of the RE without depending on the C & M Plane.

### <<Outline>>

FIG. 43 is a diagram illustrating a sequence example of an outline of the operation when inserting the information representing the receivable or unreceivable status of the user data into the specified address of the Vender Specific field.

Upon switching ON the power source of the RE 300 (SQ602), the attempt of establishing the links respectively with the REC 200A and the REC 200B is made.

The RE 300 establishes the Layer1 link (SQ612) and the Layer2 link with the REC 200A (SQ632).

Moreover, the RE 300 establishes the Layer1 link (SQ622) and the Layer2 link with the REC 200B (SQ642).

The RE 300 executes the CPRI selecting process (SQ654). Herein, the RE 300 establishes the link with the REC 200A and the link with the REC 200B and selects the CPRI-A as the CPRI using the C & M Plane. The RE 300 establishes the Layer3 link with the REC 200A (SQ672).

The C & M Plane processing unit 370 of the RE 300 is thereby connected to the CPRI-A processing unit 310. The monitor and control signals between the monitoring device 100 and the RE 300 are transmitted and received via the REC 200A.

It is presumed that the status monitoring unit 304 of the RE 300 detects the fault in the wireless function unit of the CPRI-B (SQ692). The RE 300 notifies the REC 200B that the user data may not be received by use of the Vender Specific field (SQ694). The REC 200B stops transmitting the user data to the RE 300.

Even in the CPRI link where the connection of the monitor and control signals is not established between the REC and the RE, it is feasible to conduct the control of whether the REC transmits the user data directed to the RE or not.

### <<Example of Configuration>>

FIG. 44 is a diagram illustrating an example of the configuration of the RE when inserting the information representing the receivable or unreceivable status of the user data into the specified address of the Vender Specific field.

The status monitoring unit 304 of the RE 300, when detecting the fault in the wireless function unit of the CPRI-B, notifies the CPRI status determination and CPRI selection control unit 306 of the fault. The CPRI status determination and CPRI selection control unit 306 notifies the Vender Specific processing unit 354 of information that the user data may not be received via the CPRI-B. The Vender Specific processing unit 354 describes the user data unreceivable information in the Vender Specific field. The CPRI signal containing this information is transmitted to the REC 200B.

The REC 200B can receive the user data unreceivable information described in the Vender Specific field.

### <<Operation Sequence>>

FIGS. 45 through 50 are diagrams each illustrating an operation sequence between the RE and the REC when inserting the receivability information. A1 through W1 in FIG. 45 are connected to A1 through W1 in FIG. 46. A2 through W2 in FIG. 46 are connected to A2 through W2 in FIG. 47. A3 through W3 in FIG. 47 are connected to A3 through W3 in FIG. 48. A4 through W4 in FIG. 48 are connected to A4 through W4 in FIG. 49. A5 through W5 in FIG. 49 are connected to A5 through W5 in FIG. 50.

To start with, the sequence example when starting up the RE 300 will be described.

The operations in SQ6002 in FIG. 45 through SQ6206 in FIG. 48 are the same as the operations in SQ1002 through SQ1206 in the first operational example.

The status monitoring unit 304 executes the process of detecting the fault in the wireless function unit (FIG. 49: SQ6302). The status monitoring unit 304 notifies the CPRI status determination and CPRI selection control unit 306 the status of the self-device (RE 300) with respect to each CPRI (FIG. 49: SQ6304). Herein, the status monitoring unit 304 notifies the CPRI status determination and CPRI selection control unit 306 of [CPRI-B wireless function unit fault]. In this status, the RE 300 may not transmit the data from the REC 200B to the MS 400B.

The CPRI status determination and CPRI selection control unit 306 notifies the Vender Specific processing unit 324 of the user data receivability with respect to the CPRI-A (FIG. 49: SQ6322). Herein, the CPRI status determination and CPRI selection control unit 306 notifies the Vender Specific processing unit 324 of [Receivable]. The Vender Specific processing unit 324 inserts the user data receivability information of which the CPRI status determination and CPRI selection control unit 306 has notified with respect to the CPRI-A into the specified address of the Vender Specific field. The Vender Specific processing unit 324 transmits the information in the Vender Specific field to the Layer1 processing unit 312 (FIG. 49: SQ6324). The Layer1 processing unit 312 transmits the CPRI signal containing the information in the Vender Specific field to the REC 200A (FIG. 49: SQ6326).

On the other hand, the CPRI status determination and CPRI selection control unit 306 notifies the Vender Specific processing unit 354 that the user data may not be relieved via the CPRI-B (FIG. 49: SQ6332). Herein, the CPRI status determination and CPRI selection control unit 306 notifies the Vender Specific processing unit 354 of [Unreceivable]. This is because of receiving the notification of [CPRI-B wireless function unit fault] from the status monitoring unit 304. The Vender Specific processing unit 354 inserts the user data receivability information with respect to CPRI-B, of which the CPRI status determination and CPRI selection control unit 306 has notified, into the specified address of the Vender Specific field. The Vender Specific processing unit 354 transmits the information in the Vender Specific field to the Layer1 processing unit 342 (FIG. 49: SQ6334). The Layer1 processing unit 342 transmits the CPRI signal containing the information in the Vender Specific field to the REC 200B (FIG. 49: SQ6336).

The REC 200B stops transmitting the user data to the RE 300 on the basis of the received CPRI signal from the RE 300 (FIG. 49: SQ6340).

With respect to the unselected CPRI (which is herein the CPRI-B), an available scheme is that after the REC has received [Receivable] by way of the user data receivability notification from the RE, the REC transmits the user data to the RE.

What has been discussed so far is the sequence example when starting up the RE 300.

The sequence (FIG. 50: SQ6510 through SQ6556) when operating the RE 300 is the same as SQ1510 through SQ1556 in the first operational example.

The RE 300 can, based on the fault status of the self-device, transmit the user data to the REC by inserting the information representing the status of the user data receivability into the specified address of the Vender Specific field of the CPRI signal. The REC, based on the information given from the RE 300, transmits or stops transmitting the user data and is thereby able to perform the control of whether the user data is transmitted to the RE or not even in the CPRI link where the connection of the monitor and control signals is not established between the RE and the REC.

Thus, the present invention may provide a wireless device (300) capable of being connected to any of a plurality of wireless control devices (200A, 200B) which themselves are connected to a monitoring device (100), the wireless device (300) being controlled and monitored by the monitoring device via one or more of the wireless control devices (200A, 200B). The wireless device (300) includes a transmitting and receiving unit for transmitting and receiving a signal to and from the wireless control device(s); and a selecting unit selecting, from among the plurality of wireless control devices (200A, 200B), the one wireless control device which transmits and receives a control and monitor signal, contained in the former signal, by which the monitoring device (100) controls and monitors the wireless device (300).

All example and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. A wireless device arranged to be connected to a plurality of wireless control devices connecting with a monitoring device, and controlled and monitored by the monitoring device via the wireless control device, the wireless device comprising:
a transmitting and receiving unit for transmitting and receiving a signal to and from the wireless control device; and
a selecting unit for selecting, from within the plurality of wireless control devices, the one wireless control device which transmits and receives a control and monitor signal, contained in the signal, by which the monitoring device controls and monitors a self-device.

2. A wireless device according to claim 1, further comprising a line status detecting unit for detecting a line status between the wireless control device and the self-device,
wherein the selecting unit is arranged to select the wireless control device on the basis of the line status detected by the line status detecting unit.

3. A wireless device according to claim 1 or 2, wherein the signal contains line status information representing the line status between the wireless control device which transmits the signal and the self-device, and
said selecting unit is arranged to select, based on the line status information, the one wireless control device which transmits and receives the control and monitor signal by which the monitoring device controls and monitors the self-device.

4. A wireless device according to claim 1, 2, or 3, wherein the signal contains selecting request information representing that the selecting unit makes a request for selecting the wireless control device which transmits the signal, and
said selecting unit is arranged to select, based on the selecting request information, the one wireless control device which transmits and receives the control and monitor signal by which the monitoring device controls and monitors the self-device.

5. A wireless device according to any preceding claim , further comprising a storage unit stored with priority level information of the wireless control device which transmits and receives the control and monitor signal contained in the signal,
wherein the selecting unit is arranged to select the one wireless control device which transmits and receives the control and monitor signal by which the monitoring device controls and monitors the self-device in accordance with the priority level information stored in the storage unit.

6. A wireless device according to any preceding claim, further comprising a status monitoring unit monitoring a status of the self-device,
wherein the transmitting and receiving unit is arranged to determine, based on the status of the self-device that is monitored by the status monitoring unit, receivability of data sent from the each wireless control device, to add the receivability information of the data sent from the each wireless control device on the basis of the determination to the signal, and to transmit the signal to the each wireless control device.

7. A wireless device according to any preceding claim in the form of a base station in a wireless communication system.

8. A wireless device controlling and monitoring method, in a wireless device connected to a plurality of wireless control devices connecting with a monitoring device, and controlled and monitored by the monitoring device via the wireless control device, by which the wireless device executes:
transmitting and receiving a signal to and from the wireless control device; and
selecting, from within the plurality of wireless control devices, the one wireless control device which transmits and receives a control and monitor signal, contained in the signal, by which the monitoring device controls and monitors a self-device.

9. Software which, when executed by a processor of a wireless device, performs the method according to claim 8.
